# EUROPEAN PATENT SPECIFICATION

(11) **EP 3 555 246 B1**
(45) Date of publication and mention of the grant of the patent: **25.11.2020**
(21) Application number: 17822900.1
(22) Date of filing: 08.12.2017
(51) Int. Cl.: C10M 149/06, C08F 8/32, C10N 30/00, C10N 30/02, C10N 30/04, C10N 40/25, C10N 70/00

(54) **MULTI-FUNCTIONAL OLEFIN COPOLYMERS AND LUBRICATING COMPOSITIONS CONTAINING SAME**
MULTIFUNKTIONALE OLEFINCOPOLYMERE UND SCHMIERMITTELZUSAMMENSETZUNGEN DAMIT
COPOLYMÈRES D'OLÉFINE MULTIFONCTIONNELS ET COMPOSITIONS LUBRIFIANTES LES CONTENANT

(30) Priority: 16.12.2016 US 201615381701
(43) Date of publication of application: 23.10.2019
(73) Proprietor: Afton Chemical Corporation, Richmond, Virginia 23219 (US)
(72) Inventor: PIROUZ, Solmaz, Houston, Texas 77056 (US); JIANG, Sheng, Glen Allen, Virginia 23059 (US)
(74) Representative: BRP Renaud & Partner mbB Rechtsanwälte Patentanwälte Steuerberater
(86) International application number: PCT/US2017/065410
(87) International publication number: WO 2018/111726

(56) References cited:
- EP-A1- 0 909 805
- EP-A1- 1 717 300
- US-A- 6 107 257
- US-A1- 2013 172 220

## Description

### TECHNICAL FIELD

The present invention relates to grafted, functionalized polymers having good thickening power and excellent dispersancy, and which provide improved fuel economy. The disclosure also relates to a lubricating oil composition comprising the grafted, functionalized olefin copolymers.

### BACKGROUND

The focus on fuel economy has been increased in recent years. One approach to improve the fuel economy of vehicles is to design new lubricant oils that reduce friction and have lower high-temperature high-shear ("HTHS") viscosity, while maintaining a good film thickness for durability. Viscosity modifiers ("VM") play an important role in formulating lubricant oils with these desired properties. There is a need to develop new VMs to provide features that increase fuel economy in addition to providing their primary function of thickening the lubricating oil. Common structures for VMs include linear, star, and branched polymers. Linear polymers can be further modified to provide multi-functional VMs.

The viscosity of lubricating oils is typically dependent on temperature. With an increase in oil temperature, the viscosity of the oil generally decreases. With decreasing oil temperature, the viscosity of the oil generally increases. Modern engines typically operate at high temperatures. It is important to maintain the viscosity of the lubricating oil within a specified range to properly lubricate moving parts of the engine. Additionally, the lubricating oils may be exposed to low temperatures from the environment when the engine is not running. Under these conditions, the viscosity of the oil must remain low enough so that the oil will flow at the temperatures encountered under engine starting conditions. Acceptable oil viscosity ranges for high and low temperatures are specified by the SAE J300 standard.

Lubricating oils also encounter high shear rates when used in engines. Shear rates as high as 10⁶ s⁻¹ have been reported in literature. The viscosity behavior of lubricants under HTHS conditions may have an impact on fuel economy. Fluids with relatively high HTHS viscosities typically exhibit poor fuel economy due to the formation of a thicker oil film at the boundary of the engine surfaces during engine operation. In contrast, fluids with relatively low HTHS viscosities may form a thinner film thereby providing improved fuel economy.

Base oils typically cannot meet the viscosity requirements of SAE J300 without the addition of additives such as VMs. VMs reduce the extent to which the viscosity of lubricants change with temperature, and are used to formulate oils that meet the SAE J300 standard. Suitable VMs typically include polymeric materials that may be derived from ethylene-propylene copolymers, polymethacrylates, hydrogenated styrene-butadiene copolymers, polyisobutylenes, etc.

Ethylene-propylene copolymers are typically used to provide VMs for engine oils. The ethylene content of such copolymers may range from 45 to 85 mole %. VMs derived from polymers containing about 60 mole % ethylene are commonly used and require a relatively high treat rate in oils in order to meet SAE J300 requirements. VMs derived from polymers containing higher than about 65 mole % ethylene to 85 mole % ethylene generally require a lower treat rate in oils in order to meet SAE J300 requirements than those containing about 60 mole % of ethylene.

US 2013/0172220 A1 relates to additives for lubricating oil compositions which are the reaction products of (a) an oil soluble ethylene-alpha olefin copolymer comprising 10 to less than 80% ethylene and greater than 20 up to 90 weight percent of at least one C₃-C2₈ alpha olefin, having a number average molecular weight from about 5,000 to 120,000 and grafted with 0.5-5.0 weight% of an ethylenically unsaturated acylating agent having at least one carboxyl acid group or anhydride group, with (b) a hydrocarbyl substituted poly(oxyalkylene) amine of the formula:

R₁-(O-CHR₂-CHR₃)ₓ-A

wherein R₁ is a hydrocarbyl group having from about 1 to about 35 carbon atoms, R₂ and R₃ are each independently hydrogen, methyl or ethyl, A is amino, -CH₂-amino or N-alkyl amino having about 1-10 carbon atoms and x is an integer of from 2 to about 45.

U.S. Patent no. 6,107,257 relates to additives for lubricating oil compositions that comprise multi-functional olefin copolymer viscosity modifiers. Grafted ethylene-propylene copolymers are first prepared by grafting maleic anhydride onto an ethylene-propylene copolymer backbone in the presence of a solvent. The grafted ethylene-propylene copolymer is then reacted with an N-arylphenylene diamine in the presence of a surfactant to provide the multi-functional olefin copolymer viscosity modifiers.

EP 090 805 A1 relates to a functionalized olefin copolymer comprising the reaction product of a) an olefin copolymer which contains at least two groups which are the same or different and are each independently selected from acyl and carboxylic groups, b) at least one coupling compound which contains at least two functionalities capable of reacting with an acyl and/or carboxylic group of the olefin copolymer a), which functionalities are the same or different and are each independently selected from amine, thiol and alcohol functionalities, and c) a performance enhancing compound which contains an amine, thiol and/or alcohol functionality capable of reacting with an acyl and/or carboxylic group of the olefin copolymer a), wherein the functionalised olefin copolymer comprises at least two structural units derived from the olefin copolymer a) each unit being linked by a structural unit derived from the coupling compound b), and wherein at least one of the at least two structural units derived from the olefin copolymer a) is linked to a structural unit derived from the performance enhancing compound c).

There remains a need to provide viscosity modifiers for lubricant compositions that enable the lubricant compositions to meet the SAE J300 standards while also providing lubricant compositions that exhibit improved fuel economy and desirable low temperature properties. The present invention provides grafted, multi-functional olefin copolymers, which when formulated into lubricating compositions provide good thickening power (TP), relatively low HTHS viscosity, good frictional and cold start properties, excellent dispersancy, and can provide improved fuel economy.

### SUMMARY AND TERMS

The present disclosure relates to a functionalized polymer comprising a reaction product obtainable by reaction of a hydrocarbon polymer grafted with an acylating agent that is reacted with both:
i) a hydrocarbyl substituted poly(oxyalkylene) amine and/or a hydrocarbyl substituted poly(oxyalkylene) alcohol and
ii) a polyamine.

In the foregoing embodiment, the hydrocarbyl substituted poly(oxyalkylene) amine may be represented by the formula I:

R₁-(O-CHR₂-CHR₃)ₓ-A I

wherein R₁ is a hydrocarbyl group having from 1 to 35 carbon atoms; R₂ and R₃ are each independently hydrogen, methyl, or ethyl and each R₂ and R₃ are independently selected in each -O-CHR₂-CHR₃- unit; A is amino, -CH₂-amino or N-alkyl amino having 1 to 10 carbon atoms; and x is an integer from 2 to 45.

In some embodiments, the hydrocarbyl substituted poly(oxyalkylene) amine may have the formula II: 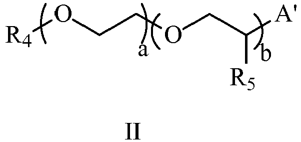 wherein R₄ is a hydrocarbyl group having from 1 to 35 carbon atoms, R₅ is independently hydrogen or a C₁-C₁₀ alkyl group for each repeat unit, R₆ is hydrogen or a C₁-C₁₀ alkyl group, A' is -NH-R₆, R₆ is hydrogen or a C₁-C₁₀ alkyl group, and a and b are integers such that a+b is from 2 to 45.

In the foregoing embodiments, a may be an integer of from 1 to 30 and b may be an integer of from 1 to 44. In the foregoing embodiments, a may be an integer of from 1 to 15 and b may be an integer of from 10 to 40.

In each of the foregoing embodiments, component i) may include a hydrocarbyl-substituted poly(oxyalkylene) alcohol of the formula:

R₁₋(O-CHR₂₋CHR₃)ₓ-R₁₉-OH

wherein R₁ is a hydrocarbyl group having from 1 to 35 carbon atoms; R₂ and R₃ are each independently hydrogen, methyl, or ethyl and each R₂ and R₃ are independently selected in each -O-CHR₂-CHR₃- unit; R₁₉ is nothing or a C₁-C₁₀ alkylene group; and x is an integer from 2 to 45.

In each of the foregoing embodiments, the hydrocarbon polymer may include a polyisobutylene. In each of the foregoing embodiments, the hydrocarbon polymer may include a hydrogenated styrene-butadiene star copolymer.

In each of the foregoing embodiments, the hydrocarbon polymer may include a copolymer of ethylene and one or more C₃-C₂₈ alpha olefins. The copolymer of ethylene and one or more C₃-C₂₈ alpha olefins may have a number average molecular weight of 5,000 to 250,000 amu and comprises 10-80 wt.% of ethylene and 20-90 wt.% of the one or more C₃-C₂₈ alpha olefins.

In each of the foregoing embodiments, the hydrocarbon polymer may contain 0.15 to 0.75 carboxylic groups per 1000 number average molecular weight units of the polymer backbone, or from 0.3 to 0.75 carboxylic groups per 1000 number average molecular weight units of the polymer backbone.

In each of the foregoing embodiments, the polyamine may be selected from the group consisting of:
a) an N-arylphenylenediamine represented by the formula III: 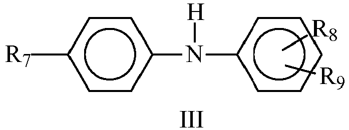 in which R₇ is hydrogen, --NH-aryl, --NH-arylalkyl, --NH-alkyl, or a branched or straight chain radical having from 4 to 24 carbon atoms selected from alkyl, alkenyl, alkoxyl, aralkyl, alkaryl, hydroxyalkyl or aminoalkyl; R₈ is --NH₂, CH₂ --(CH₂)ₙ --NH₂, CH₂ -aryl-NH₂, in which n has a value from 1 to 10; and R₉ is hydrogen, alkyl, alkenyl, alkoxyl, aralkyl, alkaryl having from 4 to 24 carbon atoms;
b) an aminothiazole;
c) an aminocarbazole represented by the formula IV: 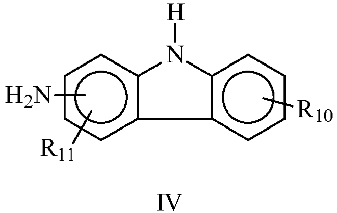 in which R₁₀ and R₁₁ represent hydrogen or an alkyl, alkenyl or alkoxyl radical having from 1 to 14 carbon atoms;
d) an aminoindole represented by the formula V: 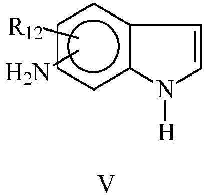 in which R₁₂ represents hydrogen or an alkyl radical having from 1 to 14 carbon atoms;
e) an aminopyrrole represented by the formula VI: 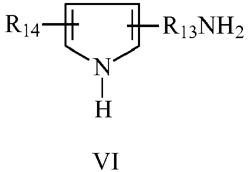 in which R₁₃ is a divalent alkylene radical having 2-6 carbon atoms and R₁₄ is hydrogen or an alkyl radical having from 1 to 14 carbon atoms;
f) an amino-indazolinone represented by the formula VII: 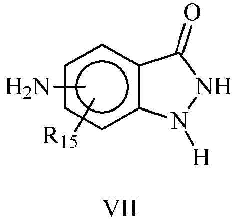 in which R₁₅ is hydrogen or an alkyl radical having from 1 to 14 carbon atoms;
g) an aminomercaptotriazole represented by the formula VIII: 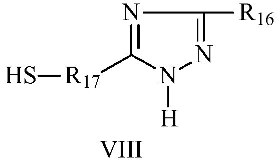 in which R₁₆ can be absent or is a C₁-C₁₀ linear or branched hydrocarbon selected from the group consisting of alkyl, alkenyl, arylalkyl, or aryl and R₁₇ can be absent or is a C₁-C₁₀ linear or branched hydrocarbylene selected from the group consisting of alkylene, alkenylene, arylalkylene, or arylene;
h) an aminoperimidine represented by the formula IX: 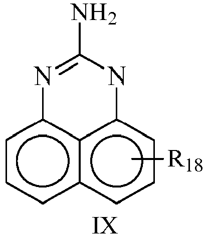 in which R₁₈ represents hydrogen or an alkyl or alkoxy radical having from 1 to 14 carbon atoms;
i) an aminoalkyl imidazole; and
j) an aminoalkyl morpholine.

In each of the foregoing embodiments, the polyamine may be represented by the formula III: 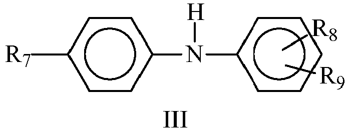 wherein R₇ is hydrogen, -NH-aryl, -NH-arylalkyl, -NH-alkyl or a branched or straight chain radical having from 4 to 24 carbon atoms selected from alkyl, alkenyl, alkoxyl, aralkyl, alkaryl, hydroxyalkyl or aminoalkyl; R₈ is --NH₂, CH₂ --(CH₂)ₙ --NH₂, CH₂ -aryl-NH₂, in which n has a value from 1 to 10; and R₉ is hydrogen, alkyl, alkenyl, alkoxyl, aralkyl, alkaryl having from 4 to 24 carbon atoms.

In each of the foregoing embodiments, the polyamine may be selected from the group consisting of N-phenyl-1,4-phenylenediamine, N-phenyl-1,3-phenylendiamine, and N-phenyl-1,2-phenylenediamine.

In some of the foregoing embodiments, the polyamine may be selected from the group consisting of ethylene diamine, propane diamine, butane diamine, diethylene triamine, triethylene tetramine, pentaethylene hexamine, aminoethyl piperazine, tetraethylene pentamine, N-methyl-1,3-propane diamine, N,N'-dimethyl-1,3-propane diamine, aminoguanidine bicarbonate, and amine bottoms. In such case, the functionalized polymer may be post treated with one of: a) a non-aromatic dicarboxylic acid or anhydride, b) an aromatic carboxylic acid, an aromatic polycarboxylic acid, or an aromatic anhydride wherein all carboxylic acid or anhydride group(s) are attached directly to an aromatic ring, and c) a combination of both of components a) and b).

In each of the foregoing embodiments, the hydrocarbon polymer may be grafted with maleic anhydride.

In other embodiments, the disclosure includes a concentrate comprising greater than 50 wt.% of a base oil; and 5 to less than 50 wt.% of a functionalized polymer as claimed claim 1, both based on a total weight of the additive concentrate.

In other embodiments, the disclosure includes a lubricating composition including greater than 50 wt.% of a base oil; and 0.1-20 wt.% of any of the foregoing functionalized polymers, both based on a total weight of the lubricating composition.'

In each of the foregoing lubricating compositions, the total amount of functionalized polymer may be from 0.1 wt.% to 12 wt.%, based on the total weight of the lubricating composition, or from 0.5 wt.% to 10 wt.%, based on a total weight of the lubricating composition.

In each of the foregoing embodiments, the lubricating composition may be an engine oil.

In other aspects, the present invention relates to a method of improving the fuel economy of an engine by lubricating the engine with any of the foregoing lubricating compositions and operating the engine.

In other aspects, the present invention relates to the use of any of the foregoing lubricating oil compositions to improve the fuel economy of an engine.

The following definitions of terms are provided in order to clarify the meanings of certain terms as used herein.

The terms "oil composition," "lubrication composition," "lubricating oil composition," "lubricating oil," "lubricant composition," "lubricating composition," "fully formulated lubricant composition," "lubricant," "crankcase oil," "crankcase lubricant," "engine oil," "engine lubricant," "motor oil," and "motor lubricant" are considered synonymous, fully interchangeable terminology referring to the finished lubrication product destined for use in a lubricating capacity and comprising a major amount of a base oil plus a minor amount of an additive composition including a viscosity modifier.

As used herein, the terms "additive package," "additive concentrate," "additive composition," "engine oil additive package," "engine oil additive concentrate," "crankcase additive package," "crankcase additive concentrate," "motor oil additive package," "motor oil concentrate," are considered synonymous, fully interchangeable terminology referring the portion of the lubricating oil composition excluding the major amount of base oil stock mixture. The additive package may or may not include the viscosity index improver or pour point depressant.

The term "overbased" relates to metal salts, such as metal salts of sulfonates, carboxylates, salicylates, and/or phenates, wherein the amount of metal present exceeds the stoichiometric amount. Such salts may have a conversion level in excess of 100% (i.e., they may comprise more than 100% of the theoretical amount of metal needed to convert the acid to its "normal," "neutral" salt). The expression "metal ratio," often abbreviated as MR, is used to designate the ratio of total chemical equivalents of metal in the overbased salt to chemical equivalents of the metal in a neutral salt according to known chemical reactivity and stoichiometry. In a normal or neutral salt, the metal ratio is one and in an overbased salt, MR, is greater than one. They are commonly referred to as overbased, hyperbased, or superbased salts and may be salts of organic sulfur acids, carboxylic acids, salicylates, and/or phenols.

As used herein, the term, "hydrocarbon polymer" includes linear, branched and star-shaped polymers, as well as tapered, block, homogeneous and random copolymers.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:
(a) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic moiety);
(b) substituted hydrocarbon substituents, that is, substituents containing non-hydrocarbon groups which, in the context of this disclosure, do not alter the predominantly hydrocarbon substituent (e.g., halo (especially chloro and fluoro), hydroxy, alkoxy, mercapto, alkylmercapto, nitro, nitroso, amino, alkylamino, and sulfoxy); and
(c) hetero substituents, that is, substituents which, while having a predominantly hydrocarbon character, in the context of this disclosure, contain other than carbon in a ring or chain otherwise composed of carbon atoms. Heteroatoms may include sulfur, oxygen, and nitrogen, and encompass substituents such as pyridyl, furyl, thienyl, and imidazolyl. In general, no more than two, for example, no more than one, non-hydrocarbon substituent will be present for every ten carbon atoms in the hydrocarbyl group; typically, there will be no non-hydrocarbon substituents in the hydrocarbyl group.

As used herein, the term "percent by weight", unless expressly stated otherwise, means the percentage the recited component represents to the weight of the entire composition.

The terms "soluble," "oil-soluble," or "dispersible" used herein may, but does not necessarily, indicate that the compounds or additives are soluble, dissolvable, miscible, or capable of being suspended in the oil in all proportions. The foregoing terms do mean, however, that they are, for instance, soluble, suspendable, dissolvable, or stably dispersible in oil to an extent sufficient to exert their intended effect in the environment in which the oil is employed. Moreover, the additional incorporation of other additives may also permit incorporation of higher levels of a particular additive, if desired.

The term "TBN" as employed herein is used to denote the Total Base Number in mg KOH/g as measured by the method of ASTM D2896, ASTM D4739 or DIN 51639-1.

As used herein the term, "viscosity modifier" refers to a component that reduces the tendency of a lubricant's viscosity to change when subjected to temperature changes. Viscosity modifiers typically increase the viscosity of a lubricant at its operating temperature thereby increasing the viscosity index of the lubricating oil. The term, "viscosity modifier" is used interchangeably with the term, "viscosity index improver."

As used herein, the term "viscosity modifier concentrate," refers an additive concentrate that includes a viscosity modifier component plus a diluent, such as a base oil or hydrocarbon solvent. A viscosity modifier concentrate may be used to deliver the viscosity modifier component to the lubricating oil, particularly if the additive concentrate used to formulate the lubricating oil does not contain a viscosity modifier or if additional viscosity modifier is required.

The term "alkyl" as employed herein refers to straight, branched, cyclic, and/or substituted saturated chain moieties of from 1 to 100 carbon atoms.

The term "alkenyl" as employed herein refers to straight, branched, cyclic, and/or substituted unsaturated chain moieties of from 3 to 10 carbon atoms.

The term "aryl" as employed herein refers to single and multi-ring aromatic compounds that may include alkyl, alkenyl, alkylaryl, amino, hydroxyl, alkoxy, halo substituents, and/or heteroatoms including, but not limited to, nitrogen, oxygen, and sulfur.

Lubricants, combinations of components, or individual components of the present description may be suitable for use in various types of internal combustion engines. Suitable engine types may include, but are not limited to heavy duty diesel, passenger car, light duty diesel, medium speed diesel, or marine engines. An internal combustion engine may be a diesel fueled engine, a gasoline fueled engine, a natural gas fueled engine, a bio-fueled engine, a mixed diesel/biofuel fueled engine, a mixed gasoline/biofuel fueled engine, an alcohol fueled engine, a mixed gasoline/alcohol fueled engine, a compressed natural gas (CNG) fueled engine, or mixtures thereof. A diesel engine may be a compression ignited engine. A gasoline engine may be a spark-ignited engine. An internal combustion engine may also be used in combination with an electrical or battery source of power. An engine so configured is commonly known as a hybrid engine. The internal combustion engine may be a 2-stroke, 4-stroke, or rotary engine. Suitable internal combustion engines include marine diesel engines (such as inland marine), aviation piston engines, low-load diesel engines, and motorcycle, automobile, locomotive, and truck engines.

The internal combustion engine may contain components of one or more of an aluminum-alloy, lead, tin, copper, cast iron, magnesium, ceramics, stainless steel, composites, and/or mixtures thereof. The components may be coated, for example, with a diamond-like carbon coating, a lubrited coating, a phosphorus-containing coating, molybdenum-containing coating, a graphite coating, a nano-particle-containing coating, and/or mixtures thereof. The aluminum-alloy may include aluminum silicates, aluminum oxides, or other ceramic materials. In one embodiment the aluminum-alloy is an aluminum-silicate surface. As used herein, the term "aluminum alloy" is intended to be synonymous with "aluminum composite" and to describe a component or surface comprising aluminum and another component intermixed or reacted on a microscopic or nearly microscopic level, regardless of the detailed structure thereof. This would include any conventional alloys with metals other than aluminum as well as composite or alloy-like structures with non-metallic elements or compounds such with ceramic-like materials.

The lubricating oil composition for an internal combustion engine may be suitable for any engine lubricant irrespective of the sulfur, phosphorus, or sulfated ash (ASTM D-874) content. The sulfur content of the engine oil lubricant may be 1 wt.% or less, or 0.8 wt.% or less, or 0.5 wt.% or less, or 0.3 wt.% or less, or 0.2 wt.% or less. In one embodiment the sulfur content may be in the range of 0.001 wt.% to 0.5 wt.%, or 0.01 wt.% to 0.3 wt.%. The phosphorus content may be 0.2 wt.% or less, or 0.1 wt.% or less, or 0.085 wt.% or less, or 0.08 wt.% or less, or even t 0.06 wt.% or less, 0.055 wt.% or less, or 0.05 wt.% or less. In one embodiment the phosphorus content may be 50 ppm to 1000 ppm, or 325 ppm to 850 ppm. The total sulfated ash content may be 2 wt.% or less, or 1.5 wt.% or less, or 1.1 wt.% or less, or 1 wt.% or less, or 0.8 wt.% or less, or 0.5 wt.% or less. In one embodiment the sulfated ash content may be 0.05 wt.% to 0.9 wt.%, or 0.1 wt.% or 0.2 wt.% to 0.45 wt.%. In another embodiment, the sulfur content may be 0.4 wt.% or less, the phosphorus content may be 0.08 wt.% or less, and the sulfated ash is 1 wt.% or less. In yet another embodiment the sulfur content may be 0.3 wt.% or less, the phosphorus content is 0.05 wt.% or less, and the sulfated ash may be 0.8 wt.% or less.

In one embodiment the lubricating oil composition is an engine oil, wherein the lubricating oil composition may have (i) a sulfur content of 0.5 wt.% or less, (ii) a phosphorus content of 0.1 wt.% or less, and (iii) a sulfated ash content of 1.5 wt.% or less.

In one embodiment the lubricating oil composition is suitable for a 2-stroke or a 4-stroke marine diesel internal combustion engine. In one embodiment the marine diesel combustion engine is a 2-stroke engine. In some embodiments, the lubricating oil composition is not suitable for a 2-stroke or a 4-stroke marine diesel internal combustion engine for one or more reasons, including but not limited to, the high sulfur content of fuel used in powering a marine engine and the high TBN required for a marine-suitable engine oil (e.g., above 40 TBN in a marine-suitable engine oil).

In some embodiments, the lubricating oil composition is suitable for use with engines powered by low sulfur fuels, such as fuels containing 1 to 5% sulfur. Highway vehicle fuels contain about 15 ppm sulfur (or about 0.0015% sulfur).

Low speed diesel typically refers to marine engines, medium speed diesel typically refers to locomotives, and high speed diesel typically refers to highway vehicles. The lubricating oil composition may be suitable for only one of these types or all.

Further, lubricants of the present description may be suitable to meet one or more industry specification requirements such as ILSAC GF-3, GF-4, GF-5, GF-6, PC-11, CI-4, CJ-4, ACEA A1/B1, A2/B2, A3/B3, A3/B4, A5/B5, C1, C2, C3, C4, C5, E4/E6/E7/E9, Euro 5/6,Jaso DL-1, Low SAPS, Mid SAPS, or original equipment manufacturer specifications such as Dexos™ 1, Dexos™ 2, MB-Approval 229.51/229.31, VW 502.00, 503.00/503.01, 504.00, 505.00, 506.00/506.01, 507.00, 508.00, 509.00, BMW Longlife-04, Porsche C30, Peugeot Citroën Automobiles B71 2290, B71 2296, B71 2297, B71 2300, B71 2302, B71 2312, B71 2007, B71 2008, Ford WSS-M2C153-H, WSS-M2C930-A, WSS-M2C945-A, WSS-M2C913A, WSS-M2C913-B, WSS-M2C913-C, GM 6094-M, Chrysler MS-6395, or any past or future PCMO or HDD specifications not mentioned herein. In some embodiments for passenger car motor oil (PCMO) applications, the amount of phosphorus in the finished fluid is 1000 ppm or less or 900 ppm or less or 800 ppm or less.

Other hardware may not be suitable for use with the disclosed lubricant. A "functional fluid" is a term which encompasses a variety of fluids including but not limited to tractor hydraulic fluids, power transmission fluids including automatic transmission fluids, continuously variable transmission fluids and manual transmission fluids, hydraulic fluids, including tractor hydraulic fluids, some gear oils, power steering fluids, fluids used in wind turbines, compressors, some industrial fluids, and fluids related to power train components. It should be noted that within each of these fluids such as, for example, automatic transmission fluids, there are a variety of different types of fluids due to the various transmissions having different designs which have led to the need for fluids of markedly different functional characteristics. This is contrasted by the term "lubricating fluid" which is not used to generate or transfer power.

With respect to tractor hydraulic fluids, for example, these fluids are all-purpose products used for all lubricant applications in a tractor except for lubricating the engine. These lubricating applications may include lubrication of gearboxes, power take-off and clutch(es), rear axles, reduction gears, wet brakes, and hydraulic accessories.

When the functional fluid is an automatic transmission fluid, the automatic transmission fluids must have enough friction for the clutch plates to transfer power. However, the friction coefficient of fluids has a tendency to decline due to the temperature effects as the fluid heats up during operation. It is important that the tractor hydraulic fluid or automatic transmission fluid maintain its high friction coefficient at elevated temperatures, otherwise brake systems or automatic transmissions may fail. This is not a function of an engine oil.

Tractor fluids, and for example Super Tractor Universal Oils (STUOs) or Universal Tractor Transmission Oils (UTTOs), may combine the performance of engine oils with transmissions, differentials, final-drive planetary gears, wet-brakes, and hydraulic performance. While many of the additives used to formulate a UTTO or a STUO fluid are similar in functionality, they may have deleterious effect if not incorporated properly. For example, some anti-wear and extreme pressure additives used in engine oils can be extremely corrosive to the copper components in hydraulic pumps. Detergents and dispersants used for gasoline or diesel engine performance may be detrimental to wet brake performance. Friction modifiers specific to quiet wet brake noise, may lack the thermal stability required for engine oil performance. Each of these fluids, whether functional, tractor, or lubricating, are designed to meet specific and stringent manufacturer requirements.

The present disclosure provides novel lubricating oil blends formulated for use as automotive crankcase lubricants. The present disclosure provides novel lubricating oil blends formulated for use as 2T and/or 4T motorcycle crankcase lubricants. Embodiments of the present disclosure may provide lubricating oils suitable for crankcase applications and having improvements in the following characteristics: air entrainment, alcohol fuel compatibility, antioxidancy, antiwear performance, biofuel compatibility, foam reducing properties, friction reduction, fuel economy, preignition prevention, rust inhibition, sludge and/or soot dispersability, piston cleanliness, deposit formation, and water tolerance.

Engine oils of the present disclosure may be formulated by the addition of one or more additives, as described in detail below, to an appropriate base oil formulation. The additives may be combined with a base oil in the form of an additive package (or concentrate) or, alternatively, may be combined individually with a base oil (or a mixture of both). The fully formulated engine oil may exhibit improved performance properties, based on the additives added and their respective proportions.

Additional details and advantages of the disclosure will be set forth in part in the description which follows, and/or may be learned by practice of the disclosure. The details and advantages of the disclosure may be realized and attained by means of the elements and combinations particularly pointed out in the appended claims. It is to be understood that both the foregoing general description and the following detailed description are exemplary and explanatory only and are not restrictive of the disclosure, as claimed.

### DETAILED DESCRIPTION

The disclosure provides functionalized polymers, multi-functional viscosity modifiers, functionalized polymer concentrates, viscosity modifier concentrates and lubricating oil compositions comprising the functionalized polymers. The lubricating oil compositions may be employed to improve fuel economy. The functionalized polymers and viscosity modifiers (VM) can be used to reduce friction, provide an acceptable high-temperature high shear ("HTHS") viscosity, and maintain good film thickness in a lubricant. The functionalized polymers described herein may also provide an enhancement of fuel economy, as well as good thickening properties when employed in lubricating oils. The functionalized polymers described herein are grafted, multi-functional hydrocarbon polymers.

The disclosure also provides lubricant compositions containing the grafted, functionalized polymers as well as methods of using lubricant compositions containing the grafted, functionalized polymers to provide improved engine operational performance and better fuel economy.

The lubricating composition includes base oil and a functionalized polymer, as well as one or more additional optional additives known to be useful in lubricant compositions, as discussed in further detail below. The functionalized polymer is a grafted functionalized polymer. The functionalized polymer may provide an acceptable HTHS viscosity, maintain a good film thickness and may also improve soot dispersancy. It is believed that the combination of one or more of these beneficial properties may increase the fuel economy of an engine in which the functionalized polymer is used.

The functionalized polymer of the disclosure is a reaction product of a hydrocarbon polymer grafted with an acylating agent that is reacted with both: i) a hydrocarbyl substituted poly(oxyalkylene) amine or a poly(oxyalkylene) alcohol and ii) a polyamine.

In order to provide the grafted hydrocarbon polymer, the hydrocarbon polymer is first grafted with an acylating agent to produce a hydrocarbon polymer grafted with the acylating agent.

### The Hydrocarbon Polymer

The hydrocarbon polymer employed in the grafting reaction to provide a grafted hydrocarbon polymer may be selected from any suitable hydrocarbon polymer. Suitable hydrocarbon polymers include linear, branched and star-shaped polymers, as well as tapered, block, homogeneous and random copolymers.

In some embodiments, the hydrocarbon polymer may be polyisobutylene (PIB). Suitable polyisobutylenes typically have a number average molecular weight in the range 350 to 50,000, or to 5000, or to 3000.

In some embodiments, polyisobutylene, when included, may have greater than 50 mol%, greater than 60 mol%, greater than 70 mol%, greater than 80 mol%, or greater than 90 mol% content of terminal double bonds. Such PIB is also referred to as highly reactive PIB ("HR-PIB"). HR-PIB having a number average molecular weight ranging from 800 to 5000 is suitable for use in embodiments of the present disclosure. Conventional PIB typically has less than 50 mol%, less than 40 mol%, less than 30 mol%, less than 20 mol%, or less than 10 mol% content of terminal double bonds.

An HR-PIB having a number average molecular weight ranging from 900 to 3000 may be suitable. Such HR-PIB is commercially available, or can be synthesized by the polymerization of isobutene in the presence of a non-chlorinated catalyst such as boron trifluoride, as described in U.S. Patent No. 4,152,499 to Boerzel, et al. and U.S. Patent No. 5,739,355 to Gateau, et al. When used in the aforementioned thermal ene reaction, HR-PIB may lead to higher conversion rates in the reaction, as well as lower amounts of sediment formation, due to increased reactivity. A suitable method is described in U.S. Patent No. 7,897,696.

In other embodiments, the hydrocarbon polymer may be a hydrogenated styrene-butadiene star copolymer. The ratio of styrene to butadiene with respect to the monomers used in the formation of the star copolymer is 3 to 25% styrene and 97 to 75% of butadiene, alternatively 5 to 20% styrene and 95 to 80% butadiene. In one example, the styrene is approximately 10% and butadiene 90% of the result of the components in the star copolymer.

The copolymer with radial or star architecture typically contains polymeric arms that may be chemically bonded to a core portion. The core portion may be a polyvalent coupling agent such as a polyvalent divinyl non-acrylic monomer, oligomer polymer, or copolymer thereof, or silicon tetrachloride. In one embodiment the polyvalent divinyl non-acrylic monomer is divinyl benzene.

The amount of polyvalent coupling agent may be an amount suitable to provide coupling of copolymer previously prepared as arms onto a core comprising the coupling agent in monomeric, oligomeric, or polymeric form, to provide a star copolymer. As described above, suitable amounts may be determined readily by the person skilled in the art with minimal experimentation, even though several variables may be involved. Typically the mole ratio of copolymer arms to coupling agent may be 50:1 to 1:1, or 30:1 to 2:1, or 20:1 to 4.1, or 15:1 to 10:1. The desired ratio may also be adjusted to take into account the length of the arms, longer arms sometimes tolerating or requiring more coupling agent than shorter arms. Typically the material prepared is soluble in an oil of lubricating viscosity.

In one embodiment the polymeric arms of the copolymer have a polydispersity of 2 or less, or 1.7 or less, or 1.5 or less, for instance, 1 to 1.4 as measured before radial or star copolymer formation or on uncoupled units.

The composition containing polymers with the radial or star architecture may thus also have uncoupled polymeric arms present (also referred to as a polymer chain or linear polymer) the percentage conversion of a polymer chain to radial or star polymer may be at least 50%, for instance at least 70%, at least 75% or at least 80%. In one embodiment the conversion of polymer chain to radial or star copolymer may be 90%, 95% or 100%. In one embodiment a portion of the polymer chains does not form a star copolymer and remains as a linear polymer. In one embodiment the polymer is a mixture of (i) a polymer with radial or star architecture, and (ii) linear polymer chains (also referred to as uncoupled polymeric arms). In different embodiments the amount of radial or star architecture within the polymer composition may be 10 wt. % to 85 wt. %, to 25 wt. % to 70 wt. % of the amount of polymer. In different embodiments the linear polymer chains may be present at 5 wt. % to 90 wt. %, or 30 wt. % to 75 wt. % of the amount of star copolymer.

The copolymer with radial or star architecture may have 3 or more arms, or 5 or more arms, or 7 or more arms, or 10 or more arms. In other embodiments, there may be 12 or more arms, or 20 or more arms. Generally, the number of arms ranges from 3 to 30, or alternatively from 4 to 20.

The molecular weight M_{w} of the final star copolymer depends on the size and average number of arms on each molecule. In one example, the molecular weight of the star copolymer is greater than 700,000, alternatively greater than 650,000, and still further greater than 600,000. The molecular weight of each arm on these star molecules is more than 70,000, alternatively more than 60,000, and still further alternatively more than 50,000.

The star copolymer is a hydrogenated molecule. The degree of hydrogenation is greater than 99%, alternatively greater than 98%, and still further alternatively greater than 95%. In the following examples, a titanium catalyst is used in the hydrogenation of the copolymer. Preferably, the hydrogenation step is carried out in accordance with the procedure disclosed in the European Patent Application EP 914,867 and European Patent Application EP 816,382.

The star copolymer may be prepared by any suitable method such as the methods described in U.S. Patent no. 8,999,905.

In another embodiment, the hydrocarbon polymer may be a copolymer of ethylene and one or more C₃ to C₂₈ alpha-olefins. Such polymers may be prepared from ethylene and propylene or it may be prepared from ethylene and at least one higher olefin within the range of C₃ to C₂₈ alpha-olefins.

Preferred polymers for use in the present invention are copolymers of ethylene and one or more C₃ to C₂₈ alpha-olefins. Copolymers of ethylene and propylene are most preferred. Other alpha-olefins suitable for use in place of propylene to form the copolymer or to be used in combination with ethylene and propylene to form a terpolymer include 1-butene, 1-pentene, 1-hexene, 1-octene and styrene; α,ω-dioleflns such as 1,5-hexadiene, 1,6-heptadiene, 1,7-octadiene; branched chain alpha-olefins such as 4-methylbutene-1,5-methylpentene-1 and 6-methylheptene-1; and mixtures thereof.

More complex polymer substrates, often designated as interpolymers, may be prepared using a third component. The third component that may be used to prepare an interpolymer substrate is a polyene monomer selected from non-conjugated dienes and trienes. The-non-conjugated diene component is one having from 5 to 14 carbon atoms in the chain. Preferably, the diene monomer is characterized by the presence of a vinyl group in its structure and can include cyclic and bicyclo compounds. Representative dienes include 1,4-hexadiene, 1,4-cyclohexadiene, dicyclopentadiene, 5-ethylidene-2-norbornene, 5-methylene-2-norborene, 1,5-heptadiene, and 1,6-octadiene. A mixture of more than one diene can be used in the preparation of the interpolymer. A preferred non-conjugated diene for preparing a terpolymer or interpolymer substrate is 1,4-hexadiene.

The triene component will have at least two non-conjugated double bonds, and up to 30 carbon atoms in the chain. Typical trienes useful in preparing the interpolymer of the invention are 1-isopropylidene-3α,4,7,7α-tetrahydroindene, 1-isopropylidenedicyclopentadiene, dihydro-isodicyclopentadiene, and 2-(2-methylene-4-methyl-3-pentenyl)[2.2.1]bicyclo-5-heptene.

Ethylene-propylene or higher alpha-olefin copolymers may consist of from 10 to 80 mole percent ethylene and from 90 to 20 mole percent C₃ to C₂₈ alpha-olefin with the preferred mole ratios being from 35 to 75 mole percent ethylene and from 65 to 25 mole percent of a C₃ to C₂₈ alpha-olefin, with the more preferred proportions being from 50 to 70 mole percent ethylene and 50 to 30 mole percent C₃ to C₂₈ alpha-olefin, and the most preferred proportions being from 55 to 65 mole percent ethylene and 45 to 35 mole percent C₃ to C₂₈ alpha-olefin.

Terpolymer variations of the foregoing polymers may contains from 0.1 to 10 mole percent of a non-conjugated diene or triene.

The polymer substrate, that is the ethylene copolymer or terpolymer, is an oil-soluble, linear or branched polymer having a number average molecular weight from 5,000 to 250,000 as determined by gel permeation chromatography and universal calibration standardization, with a preferred number average molecular weight range of 20,000 to 120,000 or a more preferred number average molecular weight range of 30,000 to 110,000.

The terms polymer and copolymer are used generically to encompass ethylene copolymers, terpolymers or interpolymers. These materials may contain minor amounts of other olefinic monomers so long as the basic characteristics of the ethylene copolymers are not materially changed.

The polymerization reaction used to form the ethylene-olefin copolymer substrate is generally carried out in the presence of a conventional Ziegler-Natta or metallocene catalyst system. The polymerization medium is not specific and can include solution, slurry, or gas phase processes, as known to those skilled in the aft. When solution polymerization is employed, the solvent may be any suitable inert hydrocarbon solvent that is liquid under reaction conditions for polymerization of alpha-olefins; examples of satisfactory hydrocarbon solvents include straight chain paraffins having from 5 to 8 carbon atoms, with hexane being preferred. Aromatic hydrocarbons, preferably aromatic hydrocarbon having a single benzene nucleus, such as benzene, toluene and the like; and saturated cyclic hydrocarbons having boiling point ranges approximating those of the straight chain paraffinic hydrocarbons and aromatic hydrocarbons described above, are particularly suitable. The solvent selected may be a mixture of one or more of the foregoing hydrocarbons. When slurry polymerization is employed, the liquid phase for polymerization is preferably liquid propylene. It is desirable that the polymerization medium be free of substances that will interfere with the catalyst components.

### The Acylating Agent

An ethylenically unsaturated carboxylic acid material is next grafted onto the prescribed polymer backbone to form a grafted hydrocarbon polymer. These carboxylic reactants which are suitable for grafting onto the ethylene copolymer contain at least one ethylenic bond and at least one, preferably two, carboxylic acid or anhydride groups or a polar group which is convertible into carboxyl groups by oxidation or hydrolysis. Preferably, the carboxylic reactants are selected from the group consisting of acrylic, methacrylic, cinnamic, crotonic, maleic, fumaric and itaconic reactants. More preferably, the carboxylic reactants are selected from the group consisting of maleic acid, fumaric acid, maleic anhydride and derivatives thereof, or a mixture of two or more of these. Maleic anhydride or a derivative thereof is generally most preferred due to its commercial availability and ease of reaction. In the case of unsaturated ethylene copolymers or terpolymers, itaconic acid or its anhydride is preferred due to its reduced tendency to form a cross-linked structure during the free-radical grafting process.

The ethylenically unsaturated carboxylic acid materials typically can provide one or two carboxylic groups per mole of reactant to the grafted polymer. That is, methyl methacrylate can provide one carboxylic group per molecule to the grafted polymer while maleic anhydride can provide two carboxylic groups per molecule to the grafted polymer.

The carboxylic reactant is grafted onto the prescribed polymer backbone in an amount to provide 0.0.15 to 0.75 carboxylic groups per 1000 number average molecular weight units of the polymer backbone, preferably 0.3 to 0.75 carboxylic groups per 1000 number average molecular weight, and more preferably 0.3 to 0.5 carboxylic groups per 1000 number average molecular weight units of the polymer backbone. For example, a copolymer substrate with Mn of 20,000 is grafted with 6 to 15 carboxylic groups per polymer chain or 3 to 7.5 moles of maleic anhydride per mole of polymer. A copolymer with Mn of 100,000 is grafted with 30 to 75 carboxylic groups per polymer chain or 15 to 37.5 moles of maleic anhydride per polymer chain. The minimum level of functionality is the level needed to achieve the minimum satisfactory dispersancy performance. Above the maximum functionality level little, if any, additional dispersancy performance is noted and other properties of the additive may be adversely affected.

The grafting reaction to form the grafted olefin copolymers is generally carried out with the aid of a free-radical initiator either in solution or in bulk, as in an extruder or intensive mixing device. When the polymerization is carried out in hexane solution, it is economically convenient to carry out the grafting reaction in hexane as described in U.S. Pat. Nos. 4,340,689, 4,670,515 and 4,948,842. The resulting polymer intermediate is characterized by having a carboxylic acid acylating functionality randomly distributed within its structure.

In the bulk process for forming the grafted olefin copolymers, the olefin copolymer is fed to rubber or plastic processing equipment such as an extruder, intensive mixer or masticator, heated to a temperature of 150° to 400° C. and the ethylenically unsaturated carboxylic acid reagent and free-radical initiator are separately co-fed to the molten polymer to effect grafting. The reaction is carried out optionally with mixing conditions to effect shearing and grafting of the ethylene copolymers according to U.S. Pat. No. 5,075,383. The processing equipment is generally purged with nitrogen to prevent oxidation of the polymer and to aid in venting unreacted reagents and byproducts of the grafting reaction. The residence time in the processing equipment is sufficient to provide for the desired degree of grafting and to allow for purification of the grafted copolymer via venting. Mineral or synthetic lubricating oil may optionally be added to the processing equipment after the venting stage to dissolve the grafted copolymer.

Other methods known in the art for effecting reaction of ethylene-olefin copolymers with ethylenically unsaturated carboxylic reagents are described, for example, in U.S. Patent no. 6,107,207.

### The Capping Reactions

The hydrocarbon polymer may then be combined with oil and is then reacted with is reacted with both: i) a hydrocarbyl substituted poly(oxyalkylene) amine and/or a poly(oxyalkylene) alcohol and ii) a polyamine. These reactions may be carried out in any order as well as simultaneously in the same reactor. Components i) and ii) are employed in the acylation reactions in amounts that ensure that the produced functionalized polymer comprises from 1-99 mol.% of component i) and from 99-1 mol.% of component ii), based on the total moles of components i) and ii) incorporated into the functionalized polymer product. More preferably, produced functionalized polymer comprises from 25-75 mol.% of component i) and from 75-25 mol.% of component ii), and, most preferably, produced functionalized polymer comprises from 40-60 mol.% of component i) and from 60-40 mol.% of component ii).

### Component i)

Component i) may be a hydrocarbyl substituted poly(oxyalkylene) amine, a hydrocarbyl substituted poly(oxyalkylene) alcohol or a mixture thereof.

The hydrocarbyl substituted poly(oxyalkylene) amine and the hydrocarbyl substituted poly(oxyalkylene) alcohol may be represented by the formula I:

R₁-(O-CHR₂-CHR₃)ₓ-A

wherein R₁ is a hydrocarbyl group having from 1 to 35 carbon atoms; R₂ and R₃ are each independently hydrogen, methyl, or ethyl and each R₂ and R₃ are independently selected in each -O-CHR₂-CHR₃- unit; A is -NH₂, -CH₂- NH₂, N-alkyl amino having 1 to 10 carbon atoms, -OH, or -R₁₉-OH, wherein R₁₉ is a C₁-C₁₀ alkylene group; and x is an integer from 2 to 45. Methods for the preparation of the hydrocarbyl substituted poly(oxyalkylene) amines are disclosed in US 2013/0172220 A1.

Particularly suitable hydrocarbyl substituted poly(oxyalkylene) amines and alcohols include compounds wherein R₁ is selected from the group consisting of alkyl, aryl, alkylaryl, arylalkyl, and arylalkylaryl. One aspect is directed to wherein R₁ is alkyl from 1-10 carbon atoms such as being selected from the group consisting of methyl, ethyl, propyl, and butyl. R₁ may also be selected from the group consisting phenyl, naphthyl, alkylnapthyl, and substituted phenyl having one to three substituents selected from alkyl, aryl, alkylaryl, arylalkyl. In this regard, R₁ is selected from the group consisting of phenyl, alkylphenyl, naphthyl and alkylnaphthyl.

In another aspect of the invention, the hydrocarbyl substituted poly(oxyalkylene) amines and alcohols, also referred to herein as the polyether amines and polyether alcohols, may have the formula II: 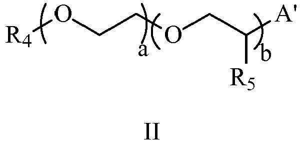 wherein R₄ is a hydrocarbyl group having from 1 to 35 carbon atoms, R₅ is independently hydrogen or a C₁-C₁₀ alkyl group for each repeat unit, A' is -OH, or -NH-R₆, R₆ is hydrogen or a C₁-C₁₀ alkyl group and a and b are integers such that a+b is from 2 to 45. More preferably, a is an integer of from 1 to 30 and b is an integer of from 1 to 44 or from 10 to 40. In one aspect, the moles of ethylene oxide "EO" is equal to or greater than propylene oxide "PO"

In one embodiment of the present invention, the hydrocarbyl-substituted poly(oxyalkylene) amine and/or alcohol is prepared form ethylene oxide, propylene oxide or combinations thereof. When both ethylene oxide and propylene oxide are used, the oxides can be reacted simultaneously when a random polyether is desired, or reacted sequentially when a block polyether is desired. Generally, when the hydrocarbyl-substituted poly(oxyalkylene) amine and/or alcohol is prepared from ethylene oxide, propylene oxide or combinations thereof, the amount of ethylene oxide on a molar basis is greater than 50 percent of the hydrocarbyl-substituted poly(oxyalkylene) amine and/or alcohol, preferably greater than 75 percent and more preferably greater than 85 percent.

The hydrocarbyl-substituted poly(oxyalkylene) amines used in the practice of this invention can be prepared using well known amination techniques such as described in U.S. Pat. No. 3,654,370; U.S. Pat. No. 4,152,353; U.S. Pat. No. 4,618,717; U.S. Pat. No. 4,766,245; U.S. Pat. No. 4,960,942; U.S. Pat. No. 4,973,761; U.S. Pat. No. 5,003,107; U.S. Pat. No. 5,352,835; U.S. Pat. No. 5,422,042; and U.S. Pat. No. 5,457,147. Generally, the hydrocarbyl-substituted poly(oxyalkylene) amines are made by aminating a poly(oxyalkylene)alcohol with ammonia in the presence of a catalyst such as a nickel containing catalyst such as a Ni/Cu/Cr catalyst.

In one aspect, when R₁ is methyl and Rs is hydrogen, particularly suitable compounds include JEFFAMINE M-600 (approx. MW 600 EO/PO-1/9), JEFFAMINE M-1000 (approx. MW 1000 EO/PO-19/3), JEFFAMINE M-2070 (approx. MW 2000 EO/PO-31/10), and JEFFAMINE M-2005 (approx. MW 2000 EO/PO-6/29). Preferred polyether amines include JEFFAMINE M-1000 and JEFFAMINE M-2070. The above JEFFAMINE compounds are available from Huntsman Chemicals. More preferred polyether amines of the present invention have a molecular weight in the range from 400 to 2500. One especially preferred hydrocarbyl-substituted poly(oxyalkylene) amine which contains from 2 to 35 ethylene oxide units and from 1 to 10 propylene oxide units.

While described above, these particular JEFFAMINE materials are methoxy terminated, the polyether amines used in practice of this invention can be capped with any other groups in which the methyl group of the methoxy group is replaced with a higher hydrocarbon such as ethyl, propyl, butyl, etc., including any alkyl substituent which comprises up to 18 carbons. It is especially preferred that the amine termination is a primary amine group.

Certain methanol initiated polyether amines are of formula: 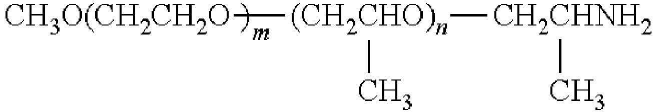 wherein m is 1 to 35 and wherein n is 1 to 15, in one aspect m>n, including polyether amines wherein m is 15 to 25 and n is 2 to 10.

In one aspect, the hydroxyl- or amine-terminated polyethers have a molecular weight of from 1,000 to 3,000.

The mixing of the grafted hydrocarbon polymer and the hydrocarbyl-substituted poly(oxyalkylene) amine and/or alcohol may be carried out in a customary mixing apparatus including batch mixers, continuous mixers, kneaders, and extruders. For most applications, the mixing apparatus will be an extruder with grafting and post-grafting derivation accomplished in a two-stage or one-stage process performed in the melt or in solution in a solvent such as a mineral or lubricating oil. In solution, it is convenient to heat the solution of copolymer intermediate having grafted thereon carboxylic acid acylating group and the prescribed polyether amine, polyether alcohol or mixture or polyether amines and/or polyether alcohols under inert conditions while mixing under reactive conditions. Typically the solution is heated to 125° C. to 175° C. under a nitrogen blanket. The amount of polyether amine and/or polyether alcohol will typically be on an order of 0.01 to 0.99 equivalents of amine and/or alcohol to carboxylic acid (anhydride) functionality. In one aspect the amount of polyether amine and/or alcohol will typically be on an order of 0.25 to 0.75 equivalents amine of and/or alcohol to carboxylic acid (anhydride) functionality. In yet another aspect, the amount of polyether amine and/or alcohol will typically be on an order of 0.4 to 0.6 equivalents of amine and/or alcohol to carboxylic acid (anhydride) functionality.

### Component ii)

The polyamine component ii) may be any polyamine suitable for providing dispersancy to the functionalized polymer. Various different types of polyamines are suitable for use in the acylation reaction. It is preferred that the polyamines contain only one primary amine group so as to avoid coupling and/or gelling of the olefin copolymers.

In one embodiment, the polyamine is selected from the group consisting of:
(a) an N-arylphenylenediamine represented by the formula III: 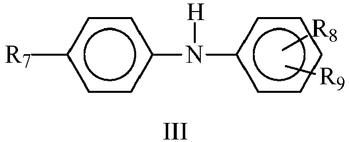 in which R¹ is hydrogen, --NH-aryl, --NH-arylalkyl, --NH-alkyl, or a branched or straight chain radical having from 4 to 24 carbon atoms selected from alkyl, alkenyl, alkoxyl, aralkyl, alkaryl, hydroxyalkyl or aminoalkyl; R₂ is --NH₂, CH₂ --(CH₂)ₙ --NH₂, CH₂ -aryl-NH₂, in which n has a value from 1 to 10; and R³ is hydrogen, alkyl, alkenyl, alkoxyl, aralkyl, alkaryl having from 4 to 24 carbon atoms;
(b) an aminothiazole from the group consisting of aminothiazole, aminobenzothiazole, aminobenzo-thiadiazole and aminoalkylthiazole;
(c) an aminocarbazole represented by the formula IV: 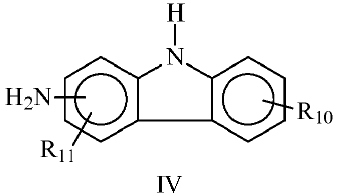 in which R₁₀ and R₁₁ represent hydrogen or an alkyl, alkenyl or alkoxyl radical having from 1 to 14 carbon atoms;
(d) an aminoindole represented by the formula V: 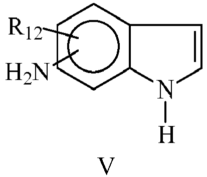 in which R₁₂ represents hydrogen or an alkyl radical having from 1 to 14 carbon atoms;
(e) an aminopyrrole represented by the formula VI: 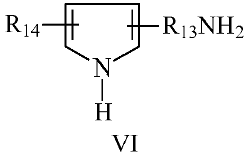 in which R₁₃ is a divalent alkylene radical having 2-6 carbon atoms and R₁₄ is hydrogen or an alkyl radical having from 1 to 14 carbon atoms;
(f) an amino-indazolinone represented by the formula VII: 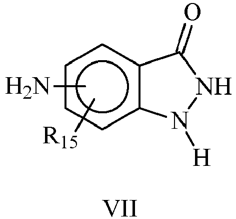 in which R₁₅ is hydrogen or an alkyl radical having from 1 to 14 carbon atoms;
(g) an aminomercaptotriazole represented by the formula VIII: 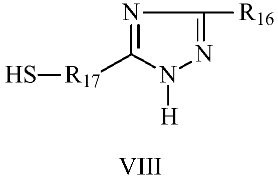 in which R₁₆ can be absent or is a C₁-C₁₀ linear or branched hydrocarbon selected from the group consisting of alkyl, alkenyl, arylalkyl, or aryl and R₁₇ can be absent or is a C₁-C₁₀ linear or branched hydrocarbylene selected from the group consisting of alkylene, alkenylene, arylalkylene, or arylene;
(h) an aminoperimidine represented by the formula IX: 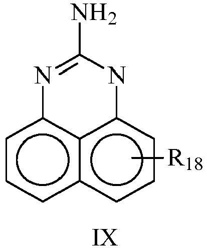 in which R₁₈ represents hydrogen or an alkyl or alkoxy radical having from 1 to 14 carbon atoms;
   (i) aminoalkyl imidazoles, such as 1-(2-aminoethyl) imidazole, 1-(3-aninopropyl) imidazole; and
   (j) aminoalkyl morpholines, such as 4-(3-aminopropyl) morpholine.

A particularly preferred class of polyamines from the above polyamines (a)-(i) are the N-aryl-phenylenediamines represented by the formula III: 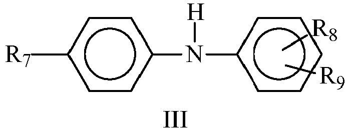 wherein R₇ is hydrogen, -NH-aryl, -NH-arylalkyl, -NH-alkyl or a branched or straight chain radical having from 4 to 24 carbon atoms selected from alkyl, alkenyl, alkoxyl, aralkyl, alkaryl, hydroxyalkyl or aminoalkyl; R² is --NH₂, CH₂--(CH₂)ₙ --NH₂, CH₂-aryl-NH₂, in which n has a value from 1 to 10; and R³ is hydrogen, alkyl, alkenyl, alkoxyl, aralkyl, alkaryl having from 4 to 24 carbon atoms. Particularly preferred N-aryl-phenylenediamines are, for example, N-phenyl-1,4-phenylenediamine, N-phenyl-1,3-phenylendiamine, and N-phenyl-1,2-phenylenediamine.

In another embodiment, the polyamine may be selected from ethylene diamine, propane diamine, butane diamine, diethylene triamine (DETA), triethylene tetramine (TETA), pentaethylene hexamine (PEHA), aminoethyl piperazine, tetraethylene pentamine (TEPA), N-methyl-1,3-propane diamine, N,N'-dimethyl-1,3-propane diamine, aminoguanidine bicarbonate (AGBC), and heavy polyamines such as E100 heavy amine bottoms. A heavy polyamine may comprise a mixture of polyalkylenepolyamines having small amounts of lower polyamine oligomers such as TEPA and PEHA, but primarily oligomers having seven or more nitrogen atoms, two or more primary amines per molecule, and more extensive branching than conventional polyamine mixtures. Additional non-limiting polyamines which may be used to prepare the hydrocarbyl-substituted succinimide dispersant are disclosed in U.S. Pat. No. 6,548,458. Preferably, these polyamines are selected from the group of triethylene tetraamine, tetraethylene pentamine, E100 heavy amine bottoms, and combinations thereof. In one preferred embodiment, the polyamine may be tetraethylene pentamine (TEPA).

The reaction between the polymer substrate intermediate having grafted thereon carboxylic acid acylating group and the prescribed polyamine compound is preferably conducted by heating a solution of the polymer substrate under inert conditions and then adding the polyamine compound to the heated solution generally with mixing to effect the reaction. It is convenient to employ an oil solution of the polymer substrate heated to 140° to 175° C., while maintaining the solution under a nitrogen blanket. The polyamine compound is added to this solution and the reaction is effected under the noted conditions.

Typically, the polyamine compound(s) is (are) dissolved in a surfactant and added to a mineral or synthetic lubricating oil or solvent solution containing the grafted olefin copolymer. This solution is heated with agitation under an inert gas purge at a temperature in the range of 120° to 200° C. as described in U.S. Pat. No. 5,384,371. The reactions are carried out conveniently in a stirred reactor under nitrogen purge. However, it is also possible to add a surfactant solution of the polyamine compound to zones downstream from the graft reaction-vent zones in a twin screw extruder reactor.

Surfactants which may be used in carrying out the reaction of the grafted olefin copolymer with the polyamine(s) include but are not limited to those characterized as having (a) solubility characteristics compatible with mineral or synthetic lubricating oil, (b) boiling point and vapor pressure characteristics so as not to alter the flash point of the oil and (c) polarity suitable for solubilizing the polyamine(s). A suitable class of such surfactants includes the reaction products of aliphatic and aromatic hydroxy compounds with ethylene oxide, propylene oxide or mixtures thereof. Such surfactants are commonly known as aliphatic or phenolic alkoxylates. Representative examples are SURFONIC® N-40, N-60, L-24-5, L-46-7 (Huntsman Chemical Company), Neodol® 23-5 and 25-7 (Shell Chemical Company) and Tergitol® surfactants (Union Carbide). Preferred surfactants include those surfactants that contain a functional group, e.g., --OH, capable of reacting with the grafted olefin copolymer.

The quantity of surfactant used depends in part on its ability to solubilize the polyamine. Typically, concentrations of 5 to 40 wt. % polyamine are employed. The surfactant can also be added separately, instead of or in addition to the concentrates discussed above, such that the total amount of surfactant in the finished additive is 10 wt. % or less.

In some cases it may be desirable to post-treat or cap the functionalized polymer, particularly when it contains secondary amino groups. Post treatment can be carried out by reaction with, for example, an aromatic carboxylic acid, an aromatic polycarboxylic acid, or an aromatic anhydride wherein all carboxylic acid or anhydride group(s) are attached directly to an aromatic ring. Such carboxyl-containing aromatic compounds may be selected from 1,8-naphthalic acid or anhydride and 1,2-naphthalenedicarboxylic acid or anhydride, 2,3-naphthalenedicarboxylic acid or anhydride, naphthalene-1,4-dicarboxylic acid, naphthalene-2,6-dicarboxylic acid, phthalic anhydride, pyromellitic anhydride, 1,2,4-benzene tricarboxylic acid anhydride, diphenic acid or anhydride, 2,3-pyridine dicarboxylic acid or anhydride, 3,4-pyridine dicarboxylic acid or anhydride, 1,4,5,8-naphthalenetetracarboxylic acid or anhydride, perylene-3,4,9,10-tetracarboxylic anhydride, pyrene dicarboxylic acid or anhydride, and the like. The moles of this post-treatment component reacted per mole of the polyamine may range from 0.1:1 to 2:1. A typical molar ratio of this post-treatment component to polyamine in the reaction mixture may range from 0.2:1 to 2.0:1. Another molar ratio of this post-treatment component to the polyamine that may be used may range from 0.25:1 to 1.5:1. This post-treatment component may be reacted with the other components at a temperature ranging from 140° to 180° C.

Post treatment can also be carried out by reaction with, for example, a non-aromatic dicarboxylic acid or anhydride. The non-aromatic dicarboxylic acid or anhydride of may have a number average molecular weight of less than 500. Suitable carboxylic acids or anhydrides thereof may include, but are not limited to acetic acid or anhydride, oxalic acid and anhydride, malonic acid and anhydride, succinic acid and anhydride, alkenyl succinic acid and anhydride, glutaric acid and anhydride, adipic acid and anhydride, pimelic acid and anhydride, suberic acid and anhydride, azelaic acid and anhydride, sebacic acid and anhydride, maleic acid and anhydride, fumaric acid and anhydride, tartaric acid and anhydride, glycolic acid and anhydride, 1,2,3,6-tetrahydronaphthalic acid and anhydride, and the like. The molar ratio of this component to the functionalized polymer may range from 0.1 to 2.5. Typically, the amount of this component used will be relative to the number of secondary amino groups in the functionalized polymer. Accordingly, from 0.2 to 2.0 moles of the post treatment agent per secondary amino group in the functionalized polymer may be used. Another molar ratio may range from 0.25:1 to 1.5:1 moles of post treatment agent per mole of functionalized polymer. This component may be reacted with the other components at a temperature ranging from 140° to a 180° C.

The post-treatment step may be carried out upon completion of the reactions forming the functionalized polymer. Also, the post treatment step may be carried out using a combination of the non-aromatic dicarboxylic acid or anhydride and the above-described aromatic carboxylic acid, aromatic polycarboxylic acid, or aromatic anhydride wherein all carboxylic acid or anhydride group(s) are attached directly to an aromatic ring.

The amount of polyamine employed in the reaction will typically be on an order of 0.01 to 0.99 equivalents of amine to carboxylic acid (anhydride) functionality in the grafted hydrocarbon polymer. In one aspect the amount of polyamine will typically be on an order of 0.25 to 0.75 equivalents amine to carboxylic acid (anhydride) functionality. In yet another aspect, the amount of polyamine will typically be on an order of 0.4 to 0.6 equivalents of amine to carboxylic acid (anhydride) functionality.

Another aspect of the disclosure is directed to a functionalized polymer or viscosity modifier concentrate. These concentrates will contain greater than 50 wt.% of base oil or diluent oil and 5 up to 50 wt.% of the functionalized polymer. In a particular embodiment the grafted ethylene-alpha olefin copolymer reacted with the hydrocarbyl poly(oxyalkylene) amine (derivative-OCP) and the NPPDA is used as a viscosity modifier for a lubricating oil composition. Preferably, the functionalized polymer has solubility in the base oil of at least 10 wt %. From 0.001 to 49 wt % of this composition is incorporated into a base oil, or a lubricating oil, depending upon whether the desired product is a finished product or another additive concentrate.

The amount of the functionalized polymer used is an amount which is effective to improve or modify the Viscosity Index of the base oil, i.e., a viscosity improving effective amount. Generally, this amount is from 0.001 to 20 wt %, or 0.001 to 10 wt%, or 0.1 wt.% to 5 wt.% for a finished product (e.g., a fully formulated lubricating oil composition), with alternative lower limits of 0.01%, 0.1% or 1%, and alternative upper limits of 15% or 10%, in other embodiments. Ranges of VI Improver concentration from any of the recited lower limits to any of the recited upper limits are within the scope of the present invention, and one skilled in the art can readily determine the appropriate concentration range based upon the ultimate solution properties.

### Base Oil

The base oil used in the lubricating oil compositions herein may be selected from any of the base oils in Groups I-V as specified in the American Petroleum Institute (API) Base Oil Interchangeability Guidelines. The five base oil groups are as follows:

| **Base oil Category** | **Sulfur (%)** | | **Saturates (%)** | **Viscosity Index** |
|---|---|---|---|---|
| Group I | > 0.03 | and/or | <90 | 80 to 120 |
| Group II | ≤0.03 | And | ≥90 | 80 to 120 |
| Group III | ≤0.03 | And | ≥90 | ≥120 |
| Group IV | All polyalphaolefins (PAOs) | | | |
| Group V | All others not included in Groups I, II, III, or IV | | | |

Groups I, II, and III are mineral oil process stocks. Group IV base oils contain true synthetic molecular species, which are produced by polymerization of olefinically unsaturated hydrocarbons. Many Group V base oils are also true synthetic products and may include diesters, polyol esters, polyalkylene glycols, alkylated aromatics, polyphosphate esters, polyvinyl ethers, and/or polyphenyl ethers, and the like, but may also be naturally occurring oils, such as vegetable oils. It should be noted that although Group III base oils are derived from mineral oil, the rigorous processing that these fluids undergo causes their physical properties to be very similar to some true synthetics, such as PAOs. Therefore, oils derived from Group III base oils may be referred to as synthetic fluids in the industry.

The base oil used in the disclosed lubricating oil composition may be a mineral oil, animal oil, vegetable oil, synthetic oil, or mixtures thereof. Suitable oils may be derived from hydrocracking, hydrogenation, hydrofinishing, unrefined, refined, and re-refined oils, and mixtures thereof.

Unrefined oils are those derived from a natural, mineral, or synthetic source without or with little further purification treatment. Refined oils are similar to the unrefined oils except that they have been treated in one or more purification steps, which may result in the improvement of one or more properties. Examples of suitable purification techniques are solvent extraction, secondary distillation, acid or base extraction, filtration, percolation, and the like. Oils refined to the quality of an edible may or may not be useful. Edible oils may also be called white oils. In some embodiments, lubricating oil compositions are free of edible or white oils.

Re-refined oils are also known as reclaimed or reprocessed oils. These oils are obtained similarly to refined oils using the same or similar processes. Often these oils are additionally processed by techniques directed to removal of spent additives and oil breakdown products.

Mineral oils may include oils obtained by drilling or from plants and animals or any mixtures thereof. For example such oils may include, but are not limited to, castor oil, lard oil, olive oil, peanut oil, corn oil, soybean oil, and linseed oil, as well as mineral lubricating oils, such as liquid petroleum oils and solvent-treated or acid-treated mineral lubricating oils of the paraffinic, naphthenic or mixed paraffinic-naphthenic types. Such oils may be partially or fully hydrogenated, if desired. Oils derived from coal or shale may also be useful.

Useful synthetic lubricating oils may include hydrocarbon oils such as polymerized, oligomerized, or interpolymerized olefins (e.g., polybutylenes, polypropylenes, propyleneisobutylene copolymers); poly(1-hexenes), poly(1-octenes), trimers or oligomers of 1-decene, e.g., poly(1-decenes), such materials being often referred to as α-olefins, and mixtures thereof; alkyl-benzenes (e.g. dodecylbenzenes, tetradecylbenzenes, dinonylbenzenes, di-(2-ethylhexyl)-benzenes); polyphenyls (e.g., biphenyls, terphenyls, alkylated polyphenyls); diphenyl alkanes, alkylated diphenyl alkanes, alkylated diphenyl ethers and alkylated diphenyl sulfides and the derivatives, analogs and homologs thereof or mixtures thereof. Polyalphaolefins are typically hydrogenated materials.

Other synthetic lubricating oils include polyol esters, diesters, liquid esters of phosphorus-containing acids (e.g., tricresyl phosphate, trioctyl phosphate, and the diethyl ester of decane phosphonic acid), or polymeric tetrahydrofurans. Synthetic oils may be produced by Fischer-Tropsch reactions and typically may be hydroisomerized Fischer-Tropsch hydrocarbons or waxes. In one embodiment oils may be prepared by a Fischer-Tropsch gas-to-liquid synthetic procedure as well as other gas-to-liquid oils.

The major amount of base oil included in a lubricating composition may be selected from the group consisting of Group I, Group II, a Group III, a Group IV, a Group V, and a combination of two or more of the foregoing, and wherein the major amount of base oil is other than base oils that arise from provision of additive components or viscosity index improvers in the composition. In another embodiment, the major amount of base oil included in a lubricating composition may be selected from the group consisting of Group II, a Group III, a Group IV, a Group V, and a combination of two or more of the foregoing, and wherein the major amount of base oil is other than base oils that arise from provision of additive components or viscosity index improvers in the composition.

The amount of the oil of lubricating viscosity present may be the balance remaining after subtracting from 100 wt.% the sum of the amount of the performance additives inclusive of viscosity index improver(s) and/or pour point depressant(s) and/or other top treat additives. For example, the oil of lubricating viscosity that may be present in a finished fluid may be a major amount, such as greater than 50 wt.%, greater than 60 wt.%, greater than 70 wt.%, greater than 80 wt.%, greater than 85 wt.%, or greater than 90 wt.%.

### Antioxidants

The lubricating oil compositions herein also may optionally contain one or more antioxidants. Antioxidant compounds are known and include for example, phenates, phenate sulfides, sulfurized olefins, phosphosulfurized terpenes, sulfurized esters, aromatic amines, alkylated diphenylamines (e.g., nonyl diphenylamine, di-nonyl diphenylamine, octyl diphenylamine, di-octyl diphenylamine), phenyl-alpha-naphthylamines, alkylated phenyl-alpha-naphthylamines, hindered non-aromatic amines, phenols, hindered phenols, oil-soluble molybdenum compounds, macromolecular antioxidants, or mixtures thereof. Antioxidant compounds may be used alone or in combination.

The hindered phenol antioxidant may contain a secondary butyl and/or a tertiary butyl group as a sterically hindering group. The phenol group may be further substituted with a hydrocarbyl group and/or a bridging group linking to a second aromatic group. Examples of suitable hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant may be an ester and may include, e.g., Irganox™ L-135 available from BASF or an addition product derived from 2,6-di-tert-butylphenol and an alkyl acrylate, wherein the alkyl group may contain 1 to 18, or 2 to 12, or 2 to 8, or 2 to 6, or 4 carbon atoms. Another commercially available hindered phenol antioxidant may be an ester and may include Ethanox™ 4716 available from Albemarle Corporation.

Useful antioxidants may include diarylamines and high molecular weight phenols. In an embodiment, the lubricating oil composition may contain a mixture of a diarylamine and a high molecular weight phenol, such that each antioxidant may be present in an amount sufficient to provide up to 5%, by weight, based upon the final weight of the lubricating oil composition. In an embodiment, the antioxidant may be a mixture of 0.3 to 1.5% diarylamine and 0.4 to 2.5% high molecular weight phenol, by weight, based upon the final weight of the lubricating oil composition.

Examples of suitable olefins that may be sulfurized to form a sulfurized olefin include propylene, butylene, isobutylene, polyisobutylene, pentene, hexene, heptene, octene, nonene, decene, undecene, dodecene, tridecene, tetradecene, pentadecene, hexadecene, heptadecene, octadecene, nonadecene, eicosene or mixtures thereof. In one embodiment, hexadecene, heptadecene, octadecene, nonadecene, eicosene or mixtures thereof and their dimers, trimers and tetramers are especially useful olefins. Alternatively, the olefin may be a Diels-Alder adduct of a diene such as 1,3-butadiene and an unsaturated ester, such as, butylacrylate.

Another class of sulfurized olefin includes sulfurized fatty acids and their esters. The fatty acids are often obtained from vegetable oil or animal oil and typically contain 4 to 22 carbon atoms. Examples of suitable fatty acids and their esters include triglycerides, oleic acid, linoleic acid, palmitoleic acid or mixtures thereof. Often, the fatty acids are obtained from lard oil, tall oil, peanut oil, soybean oil, cottonseed oil, sunflower seed oil or mixtures thereof. Fatty acids and/or ester may be mixed with olefins, such as α-olefins.

The one or more antioxidant(s) may be present in ranges 0 wt.% to 20 wt.%, or 0.1 wt.% to 10 wt.%, or 1 wt.% to 5 wt.%, of the lubricating oil composition.

### Antiwear Agents

The lubricating oil compositions herein also may optionally contain one or more antiwear agents. Examples of suitable antiwear agents include, but are not limited to, a metal thiophosphate; a metal dialkyldithiophosphate; a phosphoric acid ester or salt thereof; a phosphate ester(s); a phosphite; a phosphorus-containing carboxylic ester, ether, or amide; a sulfurized olefin; thiocarbamate-containing compounds including, thiocarbamate esters, alkylene-coupled thiocarbamates, and bis(S-alkyldithiocarbamyl)disulfides; and mixtures thereof. A suitable antiwear agent may be a molybdenum dithiocarbamate. The phosphorus containing antiwear agents are more fully described in European Patent 612 839. The metal in the dialkyl dithio phosphate salts may be an alkali metal, alkaline earth metal, aluminum, lead, tin, molybdenum, manganese, nickel, copper, titanium, or zinc. A useful antiwear agent may be zinc dialkylthiophosphate.

Further examples of suitable antiwear agents include titanium compounds, tartrates, tartrimides, oil soluble amine salts of phosphorus compounds, sulfurized olefins, phosphites (such as dibutyl phosphite), phosphonates, thiocarbamate-containing compounds, such as thiocarbamate esters, thiocarbamate amides, thiocarbamic ethers, alkylene-coupled thiocarbamates, and bis(S-alkyldithiocarbamyl) disulfides. The tartrate or tartrimide may contain alkyl-ester groups, where the sum of carbon atoms on the alkyl groups may be at least 8. The antiwear agent may in one embodiment include a citrate.

The antiwear agent may be present in ranges including 0 wt.% to 15 wt.%, or 0.01 wt.% to 10 wt.%, or 0.05 wt.% to 5 wt.%, or 0.1 wt.% to 3 wt.% of the lubricating oil composition.

### Boron-Containing Compounds

The lubricating oil compositions herein may optionally contain one or more boron-containing compounds.

Examples of boron-containing compounds include borate esters, borated fatty amines, borated epoxides, borated detergents, and borated dispersants, such as borated succinimide dispersants, as disclosed in U.S. Patent No. 5,883,057.

The boron-containing compound, if present, can be used in an amount sufficient to provide up to 8 wt.%, 0.01 wt.% to 7 wt.%, 0.05 wt.% to 5 wt.%, or 0.1 wt.% to 3 wt.% of the lubricating oil composition.

### Detergents

The lubricating oil composition may optionally further comprise one or more neutral, low based, or overbased detergents, and mixtures thereof. Suitable detergent substrates include phenates, sulfur containing phenates, sulfonates, calixarates, salixarates, salicylates, carboxylic acids, phosphorus acids, mono- and/or di-thiophosphoric acids, alkyl phenols, sulfur coupled alkyl phenol compounds, or methylene bridged phenols. Suitable detergents and their methods of preparation are described in greater detail in numerous patent publications, including US 7,732,390 and references cited therein. The detergent substrate may be salted with an alkali or alkaline earth metal such as, but not limited to, calcium, magnesium, potassium, sodium, lithium, barium, or mixtures thereof. In some embodiments, the detergent is free of barium. A suitable detergent may include alkali or alkaline earth metal salts of petroleum sulfonic acids and long chain mono- or di-alkylarylsulfonic acids with the aryl group being benzyl, tolyl, and xylyl. Examples of suitable detergents include, but are not limited to, calcium phenates, calcium sulfur containing phenates, calcium sulfonates, calcium calixarates, calcium salixarates, calcium salicylates, calcium carboxylic acids, calcium phosphorus acids, calcium mono- and/or di-thiophosphoric acids, calcium alkyl phenols, calcium sulfur coupled alkyl phenol compounds, calcium methylene bridged phenols, magnesium phenates, magnesium sulfur containing phenates, magnesium sulfonates, magnesium calixarates, magnesium salixarates, magnesium salicylates, magnesium carboxylic acids, magnesium phosphorus acids, magnesium mono- and/or di-thiophosphoric acids, magnesium alkyl phenols, magnesium sulfur coupled alkyl phenol compounds, magnesium methylene bridged phenols, sodium phenates, sodium sulfur containing phenates, sodium sulfonates, sodium calixarates, sodium salixarates, sodium salicylates, sodium carboxylic acids, sodium phosphorus acids, sodium mono- and/or di-thiophosphoric acids, sodium alkyl phenols, sodium sulfur coupled alkyl phenol compounds, or sodium methylene bridged phenols.

Overbased detergent additives are well known in the art and may be alkali or alkaline earth metal overbased detergent additives. Such detergent additives may be prepared by reacting a metal oxide or metal hydroxide with a substrate and carbon dioxide gas. The substrate is typically an acid, for example, an acid such as an aliphatic substituted sulfonic acid, an aliphatic substituted carboxylic acid, or an aliphatic substituted phenol.

The terminology "overbased" relates to metal salts, such as metal salts of sulfonates, carboxylates, and phenates, wherein the amount of metal present exceeds the stoichiometric amount. Such salts may have a conversion level in excess of 100% (i.e., they may comprise more than 100% of the theoretical amount of metal needed to convert the acid to its "normal," "neutral" salt). The expression "metal ratio," often abbreviated as MR, is used to designate the ratio of total chemical equivalents of metal in the overbased salt to chemical equivalents of the metal in a neutral salt according to known chemical reactivity and stoichiometry. In a normal or neutral salt, the metal ratio is one and in an overbased salt, MR, is greater than one. They are commonly referred to as overbased, hyperbased, or superbased salts and may be salts of organic sulfur acids, carboxylic acids, or phenols.

An overbased detergent of the lubricating oil composition may have a total base number (TBN) of 200 mg KOH/gram or greater, or as further examples, 250 mg KOH/gram or greater, or 350 mg KOH/gram or greater, or 375 mg KOH/gram or greater, or 400 mg KOH/gram or greater.

Examples of suitable overbased detergents include, but are not limited to, overbased calcium phenates, overbased calcium sulfur containing phenates, overbased calcium sulfonates, overbased calcium calixarates, overbased calcium salixarates, overbased calcium salicylates, overbased calcium carboxylic acids, overbased calcium phosphorus acids, overbased calcium mono- and/or di-thiophosphoric acids, overbased calcium alkyl phenols, overbased calcium sulfur coupled alkyl phenol compounds, overbased calcium methylene bridged phenols, overbased magnesium phenates, overbased magnesium sulfur containing phenates, overbased magnesium sulfonates, overbased magnesium calixarates, overbased magnesium salixarates, overbased magnesium salicylates, overbased magnesium carboxylic acids, overbased magnesium phosphorus acids, overbased magnesium mono- and/or di-thiophosphoric acids, overbased magnesium alkyl phenols, overbased magnesium sulfur coupled alkyl phenol compounds, or overbased magnesium methylene bridged phenols.

The overbased detergent may have a metal to substrate ratio of from 1.1:1, or from 2:1, or from 4:1, or from 5:1, or from 7:1, or from 10:1.

In some embodiments, a detergent is effective at reducing or preventing rust in an engine.

The detergent may be present at 0 wt.% to 10 wt.%, or 0.1 wt.% to 8 wt.%, or 1 wt.% to 4 wt.%, or greater than 4 wt.% to 8 wt.%.

### Dispersants

The lubricating oil composition may optionally further comprise one or more dispersants or mixtures thereof. Dispersants are often known as ashless-type dispersants because, prior to mixing in a lubricating oil composition, they do not contain ash-forming metals and they do not normally contribute any ash when added to a lubricant. Ashless type dispersants are characterized by a polar group attached to a relatively high molecular weight hydrocarbon chain. Typical ashless dispersants include N-substituted long chain alkenyl succinimides. Examples of N-substituted long chain alkenyl succinimides include polyisobutylene succinimide with number average molecular weight of the polyisobutylene substituent in the range 350 to 50,000, or to 5,000, or to 3,000. Succinimide dispersants and their preparation are disclosed, for instance in U.S. Pat. No. 7,897,696 or U.S. Pat. No. 4,234,435. The polyolefin may be prepared from polymerizable monomers containing 2 to 16, or 2 to 8, or 2 to 6 carbon atoms. Succinimide dispersants are typically the imide formed from a polyamine, typically a poly(ethyleneamine).

In an embodiment the present disclosure further comprises at least one polyisobutylene succinimide dispersant derived from polyisobutylene with number average molecular weight in the range 350 to 50,000, or to 5000, or to 3000. The polyisobutylene succinimide may be used alone or in combination with other dispersants.

In some embodiments, polyisobutylene, when included, may have greater than 50 mol%, greater than 60 mol%, greater than 70 mol%, greater than 80 mol%, or greater than 90 mol% content of terminal double bonds. Such PIB is also referred to as highly reactive PIB ("HR-PIB"). HR-PIB having a number average molecular weight ranging from 800 to 5000 is suitable for use in embodiments of the present disclosure. Conventional PIB typically has less than 50 mol%, less than 40 mol%, less than 30 mol%, less than 20 mol%, or less than 10 mol% content of terminal double bonds.

An HR-PIB having a number average molecular weight ranging from 900 to 3000 may be suitable. Such HR-PIB is commercially available, or can be synthesized by the polymerization of isobutene in the presence of a non-chlorinated catalyst such as boron trifluoride, as described in US Patent No. 4,152,499 to Boerzel, et al. and U.S. Patent No. 5,739,355 to Gateau, et al. When used in the aforementioned thermal ene reaction, HR-PIB may lead to higher conversion rates in the reaction, as well as lower amounts of sediment formation, due to increased reactivity. A suitable method is described in U.S. Patent No. 7,897,696.

In one embodiment the present disclosure further comprises at least one dispersant derived from polyisobutylene succinic anhydride ("PIBSA"). The PIBSA may have an average of between 1.0 and 2.0 succinic acid moieties per polymer.

The % actives of the alkenyl or alkyl succinic anhydride can be determined using a chromatographic technique. This method is described in column 5 and 6 in U.S. Pat. No. 5,334,321.

The percent conversion of the polyolefin is calculated from the % actives using the equation in column 5 and 6 in U.S. Pat. No. 5,334,321.

Unless stated otherwise, all percentages are in weight percent and all molecular weights are number average molecular weights.

In one embodiment, the dispersant may be derived from a polyalphaolefin (PAO) succinic anhydride.

In one embodiment, the dispersant may be derived from olefin maleic anhydride copolymer. As an example, the dispersant may be described as a poly-PIBSA.

In an embodiment, the dispersant may be derived from an anhydride which is grafted to an ethylene-propylene copolymer.

One class of suitable dispersants may be Mannich bases. Mannich bases are materials that are formed by the condensation of a higher molecular weight, alkyl substituted phenol, a polyalkylene polyamine, and an aldehyde such as formaldehyde. Mannich bases are described in more detail in U.S. Patent No. 3,634,515.

A suitable class of dispersants may be high molecular weight esters or half ester amides.

A suitable dispersant may also be post-treated by conventional methods by a reaction with any of a variety of agents. Among these are boron, urea, thiourea, dimercaptothiadiazoles, carbon disulfide, aldehydes, ketones, carboxylic acids, hydrocarbon-substituted succinic anhydrides, maleic anhydride, nitriles, epoxides, carbonates, cyclic carbonates, hindered phenolic esters, and phosphorus compounds. US 7,645,726; US 7,214,649; and US 8,048,831.

In addition to the carbonate and boric acids post-treatments both the compounds may be post-treated, or further post-treatment, with a variety of post-treatments designed to improve or impart different properties. Such post-treatments include those summarized in columns 27-29 of U.S. Pat. No. 5,241,003. Such treatments include, treatment with:
Inorganic phophorus acids or anhydrates (e.g., U.S. Pat. Nos. 3,403,102 and 4,648,980);
Organic phophorus compounds (e.g., U.S. Pat. No. 3,502,677);
Phophorus pentasulfides;
Boron compounds as already noted above (e.g., U.S. Pat. Nos. 3,178,663 and 4,652,387);
Carboxylic acid, polycarboxylic acids, anhydrides and/or acid halides (e.g., U.S. Pat. Nos. 3,708,522 and 4,948,386);
Epoxides polyepoxiates or thioexpoxides (e.g., U.S. Pat. Nos. 3,859,318 and 5,026,495);
Aldehyde or ketone (e.g., U.S. Pat. No. 3,458,530);
Carbon disulfide (e.g., U.S. Pat. No. 3,256,185);
Glycidol (e.g., U.S. Pat. No. 4,617,137);
Urea, thourea or guanidine (e.g., U.S. Pat. Nos. 3,312,619; 3,865,813; and British Patent GB 1,065,595);
Organic sulfonic acid (e.g., U.S. Pat. No. 3,189,544 and British Patent GB 2,140,811);
Alkenyl cyanide (e.g., U.S. Pat. Nos. 3,278,550 and 3,366,569);
Diketene (e.g., U.S. Pat. No. 3,546,243);
A diisocyanate (e.g., U.S. Pat. No. 3,573,205);
Alkane sultone (e.g., U.S. Pat. No. 3,749,695);
1,3-Dicarbonyl Compound (e.g., U.S. Pat. No. 4,579,675);
Sulfate of alkoxylated alcohol or phenol (e.g., U.S. Pat. No. 3,954,639);
Cyclic lactone (e.g., U.S. Pat. Nos. 4,617,138; 4,645,515; 4,668,246; 4,963,275; and 4,971,711);
Cyclic carbonate or thiocarbonate linear monocarbonate or polycarbonate, or chloroformate (e.g., U.S. Pat. Nos. 4,612,132; 4,647,390; 4,648,886; 4,670,170);
Nitrogen-containing carboxylic acid (e.g., U.S. Pat. 4,971,598 and British Patent GB 2,140,811);
Hydroxy-protected chlorodicarbonyloxy compound (e.g., U.S. Pat. No. 4,614,522);
Lactam, thiolactam, thiolactone or ditholactone (e.g., U.S. Pat. Nos. 4,614,603 and 4,666,460);
Cyclic carbonate or thiocarbonate, linear monocarbonate or plycarbonate, or chloroformate (e.g., U.S. Pat. Nos. 4,612,132; 4,647,390; 4,646,860; and 4,670,170);
Nitrogen-containing carboxylic acid (e.g., U.S. Pat. No. 4,971,598 and British Patent GB 2,440,811);
Hydroxy-protected chlorodicarbonyloxy compound (e.g., U.S. Pat. No. 4,614,522);
Lactam, thiolactam, thiolactone or dithiolactone (e.g., U.S. Pat. Nos. 4,614,603, and 4,666,460);
Cyclic carbamate, cyclic thiocarbamate or cyclic dithiocarbamate (e.g., U.S. Pat. Nos. 4,663,062 and 4,666,459);
Hydroxyaliphatic carboxylic acid (e.g., U.S. Pat. Nos. 4,482,464; 4,521,318; 4,713,189);
Oxidizing agent (e.g., U.S. Pat. No. 4,379,064);
Combination of phosphorus pentasulfide and a polyalkylene polyamine (e.g., U.S. Pat. No. 3,185,647);
Combination of carboxylic acid or an aldehyde or ketone and sulfur or sulfur chloride (e.g., U.S. Pat. Nos. 3,390,086; 3,470,098);
Combination of a hydrazine and carbon disulfide (e.g. U.S. Pat. No. 3,519,564);
Combination of an aldehyde and a phenol (e.g., U.S. Pat. Nos. 3,649,229; 5,030,249; 5,039,307);
Combination of an aldehyde and an O-diester of dithiophosphoric acid (e.g., U.S. Pat. No. 3,865,740);
Combination of a hydroxyaliphatic carboxylic acid and a boric acid (e.g., U.S. Pat. No. 4,554,086);
Combination of a hydroxyaliphatic carboxylic acid, then formaldehyde and a phenol (e.g., U.S. Pat. No. 4,636,322);
Combination of a hydroxyaliphatic carboxylic acid and then an aliphatic dicarboxylic acid (e.g., U.S. Pat. No. 4,663,064);
Combination of formaldehyde and a phenol and then glycolic acid (e.g., U.S. Pat. No. 4,699,724);
Combination of a hydroxyaliphatic carboxylic acid or oxalic acid and then a diisocyanate (e.g. U.S. Pat. No.4,713,191);
Combination of inorganic acid or anhydride of phosphorus or a partial or total sulfur analog thereof and a boron compound (e.g., U.S. Pat. No. 4,857,214);
Combination of an organic diacid then an unsaturated fatty acid and then a nitrosoaromatic amine optionally followed by a boron compound and then a glycolating agent (e.g., U.S. Pat. No. 4,973,412);
Combination of an aldehyde and a triazole (e.g., U.S. Pat. No. 4,963,278);
Combination of an aldehyde and a triazole then a boron compound (e.g., U.S. Pat. No. 4,981,492);
Combination of cyclic lactone and a boron compound (e.g., U.S. Pat. No. 4,963,275 and 4,971,711).

The TBN of a suitable dispersant may be from 10 to 65 on an oil-free basis, which is comparable to 5 to 30 TBN if measured on a dispersant sample containing about 50% diluent oil.

The dispersant, if present, can be used in an amount sufficient to provide up to 20 wt.%, based upon the final weight of the lubricating oil composition. Another amount of the dispersant that can be used may be 0.1 wt.% to 15 wt.%, or 0.1 wt.% to 10 wt.%, or 3 wt.% to 10 wt.%, or 1 wt.% to 6 wt.%, or 7 wt.% to 12 wt.%, based upon the final weight of the lubricating oil composition. In some embodiments, the lubricating oil composition utilizes a mixed dispersant system. A single type or a mixture of two or more types of dispersants in any desired ratio may be used.

### Friction Modifiers

The lubricating oil compositions herein also may optionally contain one or more friction modifiers. Suitable friction modifiers may comprise metal containing and metal-free friction modifiers and may include, but are not limited to, imidazolines, amides, amines, succinimides, alkoxylated amines, alkoxylated ether amines, amine oxides, amidoamines, nitriles, betaines, quaternary amines, imines, amine salts, amino guanadine, alkanolamides, phosphonates, metal-containing compounds, glycerol esters, sulfurized fatty compounds and olefins, sunflower oil other naturally occurring plant or animal oils, dicarboxylic acid esters, esters or partial esters of a polyol and one or more aliphatic or aromatic carboxylic acids, and the like.

Suitable friction modifiers may contain hydrocarbyl groups that are selected from straight chain, branched chain, or aromatic hydrocarbyl groups or mixtures thereof, and may be saturated or unsaturated. The hydrocarbyl groups may be composed of carbon and hydrogen or hetero atoms such as sulfur or oxygen. The hydrocarbyl groups may range from 12 to 25 carbon atoms. In some embodiments the friction modifier may be a long chain fatty acid ester. In another embodiment the long chain fatty acid ester may be a mono-ester, or a di-ester, or a (tri)glyceride. The friction modifier may be a long chain fatty amide, a long chain fatty ester, a long chain fatty epoxide derivatives, or a long chain imidazoline.

Other suitable friction modifiers may include organic, ashless (metal-free), nitrogen-free organic friction modifiers. Such friction modifiers may include esters formed by reacting carboxylic acids and anhydrides with alkanols and generally include a polar terminal group (e.g. carboxyl or hydroxyl) covalently bonded to an oleophilic hydrocarbon chain. An example of an organic ashless nitrogen-free friction modifier is known generally as glycerol monooleate (GMO) which may contain mono-, di-, and tri-esters of oleic acid. Other suitable friction modifiers are described in U.S. Pat. No. 6,723,685.

Aminic friction modifiers may include amines or polyamines. Such compounds can have hydrocarbyl groups that are linear, either saturated or unsaturated, or a mixture thereof and may contain from 12 to 25 carbon atoms. Further examples of suitable friction modifiers include alkoxylated amines and alkoxylated ether amines. Such compounds may have hydrocarbyl groups that are linear, either saturated, unsaturated, or a mixture thereof. They may contain from 12 to 25 carbon atoms. Examples include ethoxylated amines and ethoxylated ether amines.

The amines and amides may be used as such or in the form of an adduct or reaction product with a boron compound such as a boric oxide, boron halide, metaborate, boric acid or a mono-, di- or tri-alkyl borate. Other suitable friction modifiers are described in U.S. Pat. No. 6,300,291.

A friction modifier may optionally be present in ranges such as 0 wt.% to 10 wt.%, or 0.01 wt.% to 8 wt.%, or 0.1 wt.% to 4 wt.%.

### Molybdenum-containing component

The lubricating oil compositions herein also may optionally contain one or more molybdenum-containing compounds. An oil-soluble molybdenum compound may have the functional performance of an antiwear agent, an antioxidant, a friction modifier, or mixtures thereof. An oil-soluble molybdenum compound may include molybdenum dithiocarbamates, molybdenum dialkyldithiophosphates, molybdenum dithiophosphinates, amine salts of molybdenum compounds, molybdenum xanthates, molybdenum thioxanthates, molybdenum sulfides, molybdenum carboxylates, molybdenum alkoxides, a trinuclear organo-molybdenum compound, and/or mixtures thereof. The molybdenum sulfides include molybdenum disulfide. The molybdenum disulfide may be in the form of a stable dispersion. In one embodiment the oil-soluble molybdenum compound may be selected from the group consisting of molybdenum dithiocarbamates, molybdenum dialkyldithiophosphates, amine salts of molybdenum compounds, and mixtures thereof. In one embodiment the oil-soluble molybdenum compound may be a molybdenum dithiocarbamate.

Suitable examples of molybdenum compounds which may be used include commercial materials sold under the trade names such as Molyvan 822™, Molyvan™ A, Molyvan 2000™ and Molyvan 855™ from R. T. Vanderbilt Co., Ltd., and Sakura-Lube™ S-165, S-200, S-300, S-310G, S-525, S-600, S-700, and S-710 available from Adeka Corporation, and mixtures thereof. Suitable molybdenum components are described in US 5,650,381; US RE 37,363 E1; US RE 38,929 E1; and US RE 40,595 E1.

Additionally, the molybdenum compound may be an acidic molybdenum compound. Included are molybdic acid, ammonium molybdate, sodium molybdate, potassium molybdate, and other alkaline metal molybdates and other molybdenum salts, e.g., hydrogen sodium molybdate, MoOCl4, MoO2Br2, Mo2O3Cl6, molybdenum trioxide or similar acidic molybdenum compounds. Alternatively, the compositions can be provided with molybdenum by molybdenum/sulfur complexes of basic nitrogen compounds as described, for example, in U.S. Pat. Nos. 4,263,152; 4,285,822; 4,283,295; 4,272,387; 4,265,773; 4,261,843; 4,259,195 and 4,259,194; and WO 94/06897.

Another class of suitable organo-molybdenum compounds are trinuclear molybdenum compounds, such as those of the formula Mo3SkLnQz and mixtures thereof, wherein S represents sulfur, L represents independently selected ligands having organo groups with a sufficient number of carbon atoms to render the compound soluble or dispersible in the oil, n is from 1 to 4, k varies from 4 through 7, Q is selected from the group of neutral electron donating compounds such as water, amines, alcohols, phosphines, and ethers, and z ranges from 0 to 5 and includes non-stoichiometric values. At least 21 total carbon atoms may be present among all the ligands' organo groups, such as at least 25, at least 30, or at least 35 carbon atoms. Additional suitable molybdenum compounds are described in U.S. Pat. No. 6,723,685.

The oil-soluble molybdenum compound may be present in an amount sufficient to provide 0.5 ppm to 2000 ppm, 1 ppm to 700 ppm, 1 ppm to 550 ppm, 5 ppm to 300 ppm, or 20 ppm to 250 ppm of molybdenum.

### Transition Metal-containing compounds

In another embodiment, the oil-soluble compound may be a transition metal containing compound or a metalloid. The transition metals may include, but are not limited to, titanium, vanadium, copper, zinc, zirconium, molybdenum, tantalum, tungsten, and the like. Suitable metalloids include, but are not limited to, boron, silicon, antimony, tellurium, and the like.

In an embodiment, an oil-soluble transition metal-containing compound may function as antiwear agents, friction modifiers, antioxidants, deposit control additives, or more than one of these functions. In an embodiment the oil-soluble transition metal-containing compound may be an oil-soluble titanium compound, such as a titanium (IV) alkoxide. Among the titanium containing compounds that may be used in, or which may be used for preparation of the oils-soluble materials of, the disclosed technology are various Ti (IV) compounds such as titanium (IV) oxide; titanium (IV) sulfide; titanium (IV) nitrate; titanium (IV) alkoxides such as titanium methoxide, titanium ethoxide, titanium propoxide, titanium isopropoxide, titanium butoxide, titanium 2-ethylhexoxide; and other titanium compounds or complexes including but not limited to titanium phenates; titanium carboxylates such as titanium (IV) 2-ethyl-1-3-hexanedioate or titanium citrate or titanium oleate; and titanium (IV) (triethanolaminato)isopropoxide. Other forms of titanium encompassed within the disclosed technology include titanium phosphates such as titanium dithiophosphates (e.g., dialkyldithiophosphates) and titanium sulfonates (e.g., alkylbenzenesulfonates), or, generally, the reaction product of titanium compounds with various acid materials to form salts, such as oil-soluble salts. Titanium compounds can thus be derived from, among others, organic acids, alcohols, and glycols. Ti compounds may also exist in dimeric or oligomeric form, containing Ti--O--Ti structures. Such titanium materials are commercially available or can be readily prepared by appropriate synthesis techniques which will be apparent to the person skilled in the art. They may exist at room temperature as a solid or a liquid, depending on the particular compound. They may also be provided in a solution form in an appropriate inert solvent.

In one embodiment, the titanium can be supplied as a Ti-modified dispersant, such as a succinimide dispersant. Such materials may be prepared by forming a titanium mixed anhydride between a titanium alkoxide and a hydrocarbyl-substituted succinic anhydride, such as an alkenyl- (or alkyl) succinic anhydride. The resulting titanate-succinate intermediate may be used directly or it may be reacted with any of a number of materials, such as (a) a polyamine-based succinimide/amide dispersant having free, condensable --NH functionality; (b) the components of a polyamine-based succinimide/amide dispersant, i.e., an alkenyl- (or alkyl-) succinic anhydride and a polyamine, (c) a hydroxy-containing polyester dispersant prepared by the reaction of a substituted succinic anhydride with a polyol, aminoalcohol, polyamine, or mixtures thereof. Alternatively, the titanate-succinate intermediate may be reacted with other agents such as alcohols, aminoalcohols, ether alcohols, polyether alcohols or polyols, or fatty acids, and the product thereof either used directly to impart Ti to a lubricant, or else further reacted with the succinic dispersants as described above. As an example, 1 part (by mole) of tetraisopropyl titanate may be reacted with 2 parts (by mole) of a polyisobutene-substituted succinic anhydride at 140-150° C for 5 to 6 hours to provide a titanium modified dispersant or intermediate. The resulting material (30 g) may be further reacted with a succinimide dispersant from polyisobutene-substituted succinic anhydride and a polyethylenepolyamine mixture (127 grams + diluent oil) at 150° C for 1.5 hours, to produce a titanium-modified succinimide dispersant.

Another titanium containing compound may be a reaction product of titanium alkoxide and C₆ to C₂₅ carboxylic acid. The reaction product may be represented by the following formula: 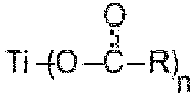 wherein n is an integer selected from 2, 3 and 4, and R is a hydrocarbyl group containing from 5 to 24 carbon atoms, or by the formula: 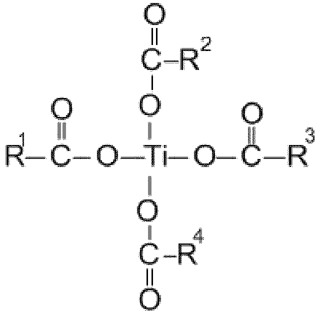 wherein each of R¹, R², R³, and R⁴ are the same or different and are selected from a hydrocarbyl group containing from 5 to 25 carbon atoms. Suitable carboxylic acids may include, but are not limited to caproic acid, caprylic acid, lauric acid, myristic acid, palmitic acid, stearic acid, arachidic acid, oleic acid, erucic acid, linoleic acid, linolenic acid, cyclohexanecarboxylic acid, phenylacetic acid, benzoic aicd, neodecanoic acid, and the like.

In an embodiment the oil soluble titanium compound may be present in the lubricating oil composition in an amount to provide from 0 to 3000 ppm titanium by weight or 25 to 1500 ppm titanium by weight or 35 ppm to 500 ppm titanium by weight or 50 ppm to 300 ppm.

### Other Optional Additives

Other additives may be selected to perform one or more functions required of a lubricating fluid. Further, one or more of the mentioned additives may be multi-functional and provide functions in addition to or other than the function prescribed herein.

A lubricating oil composition according to the present disclosure may optionally comprise other performance additives. The other performance additives may be in addition to specified additives of the present disclosure and/or may comprise one or more of metal deactivators, other viscosity index improvers, detergents, ashless TBN boosters, friction modifiers, antiwear agents, corrosion inhibitors, rust inhibitors, dispersants, other dispersant viscosity index improvers, extreme pressure agents, antioxidants, foam inhibitors, demulsifiers, emulsifiers, pour point depressants, seal swelling agents and mixtures thereof. Typically, fully-formulated lubricating oil will contain one or more of these performance additives.

Suitable metal deactivators may include derivatives of benzotriazoles (typically tolyltriazole), dimercaptothiadiazole derivatives, 1,2,4-triazoles, benzimidazoles, 2-alkyldithiobenzimidazoles, or 2-alkyldithiobenzothiazoles; foam inhibitors including copolymers of ethyl acrylate and 2-ethylhexylacrylate and optionally vinyl acetate; demulsifiers including trialkyl phosphates, polyethylene glycols, polyethylene oxides, polypropylene oxides and (ethylene oxide-propylene oxide) polymers; pour point depressants including esters of maleic anhydride-styrene, polymethacrylates, polyacrylates or polyacrylamides.

Suitable foam inhibitors include silicon-based compounds, such as siloxane.

Suitable pour point depressants may include a polymethylmethacrylates or mixtures thereof. Pour point depressants may be present in an amount sufficient to provide from 0 wt.% to 1 wt.%, 0.01 wt.% to 0.5 wt.%, or 0.02 wt.% to 0.04 wt.% based upon the final weight of the lubricating oil composition.

Suitable rust inhibitors may be a single compound or a mixture of compounds having the property of inhibiting corrosion of ferrous metal surfaces. Non-limiting examples of rust inhibitors useful herein include oil-soluble high molecular weight organic acids, such as 2-ethylhexanoic acid, lauric acid, myristic acid, palmitic acid, oleic acid, linoleic acid, linolenic acid, behenic acid, and cerotic acid, as well as oil-soluble polycarboxylic acids including dimer and trimer acids, such as those produced from tall oil fatty acids, oleic acid, and linoleic acid. Other suitable corrosion inhibitors include long-chain alpha, omega-dicarboxylic acids in the molecular weight range of 600 to 3000 and alkenylsuccinic acids in which the alkenyl group contains 10 or more carbon atoms such as, tetrapropenylsuccinic acid, tetradecenylsuccinic acid, and hexadecenylsuccinic acid. Another useful type of acidic corrosion inhibitors are the half esters of alkenyl succinic acids having 8 to 24 carbon atoms in the alkenyl group with alcohols such as the polyglycols. The corresponding half amides of such alkenyl succinic acids are also useful. A useful rust inhibitor is a high molecular weight organic acid. In some embodiments, an engine oil is devoid of a rust inhibitor.

The rust inhibitor, if present, can be used in an amount sufficient to provide 0 wt.% to 5 wt.%, 0.01 wt.% to 3 wt.%, 0.1 wt.% to 2 wt.%, based upon the final weight of the lubricating oil composition.

In general terms, a suitable crankcase lubricant may include additive components in the ranges listed in the following table.

**Table 2**

| **Component** | **Wt. % (Suitable Embodiments)** | **Wt. % (Suitable Embodiments)** |
|---|---|---|
| Dispersant(s) | 0.1 - 10.0 | 1.0 - 8.5 |
| Antioxidant(s) | 0.1 - 5.0 | 0.01 - 3.0 |
| Detergent(s) | 0.1 - 15.0 | 0.2 - 8.0 |
| Ashless TBN booster(s) | 0.0 - 1.0 | 0.01 - 0.5 |
| Corrosion inhibitor(s) | 0.0 - 5.0 | 0.0 - 2.0 |
| Metal dihydrocarbyldithiophosphate(s) | 0.1 - 6.0 | 0.1 - 4.0 |
| Ash-free phosphorus compound(s) | 0.0 - 6.0 | 0.0 - 4.0 |
| Antifoaming agent(s) | 0.0 - 5.0 | 0.001 - 0.15 |
| Antiwear agent(s) | 0.0 - 1.0 | 0.0 - 0.8 |
| Pour point depressant(s) | 0.0 - 5.0 | 0.01 - 1.5 |
| Viscosity modifier(s) | 0.0 - 20.0 | 0.25 - 10.0 |
| Dispersant viscosity index improver(s) | 0.0 - 10.0 | 0.0 - 5.0 |
| Friction modifier(s) | 0.01 - 5.0 | 0.05 - 2.0 |
| Base oil(s) | Balance | Balance |
| **Total** | **100** | **100** |

The percentages of each component above represent the weight percent of each component, based upon the weight of the final lubricating oil composition. The remainder of the lubricating oil composition consists of one or more base oils.

Additives used in formulating the compositions described herein may be blended into the base oil individually or in various sub-combinations. However, it may be suitable to blend all of the components concurrently using an additive concentrate (i.e., additives plus a diluent, such as a hydrocarbon solvent).

### EXAMPLES

The following examples are illustrative, but not limiting, of the methods and compositions of the present disclosure. Other suitable modifications and adaptations of the variety of conditions and parameters normally encountered in the field, and which are obvious to those skilled in the art, are within the scope of the disclosure.

An Example polymer was made following the procedure as described in Example 1. Three additional polymers were also made using various combinations of each of the reactants used in Example 1, as described in Comparative Examples 1-3. Various properties were determined for each of the polymers, including the amount of nitrogen on the polymer, the kinematic viscosity at 100°C ("KV 100"), the thickening power ("TP"), shear stability index ("SSI") and the dispersancy as described by the polymer's effective concentration ("Ec"). A comparison of these properties for the different polymers is shown in Table 3.

### Example P1: Preparation of Maleated Olefin Copolymer in Solution

An ethylene propylene copolymer (Mn=5400, 68.01 wt% of reaction mass), 110N base oil (29.77 wt% of reaction mass), and maleic anhydride (1.72 wt% of reaction mass) were charged into a two-neck round-bottom flask equipped with a condenser and a Dean Stark apparatus under a nitrogen blanket. The flask was heated to 165°C and held for 1 hour to ensure good dissolution of the polymers. After complete dissolution, dicumyl peroxide (0.25 wt% of reaction mass) was charged to the flask, the flask was then held for 30 minutes following by another charge of dicumyl peroxide (0.25 wt% of reaction mass) and a further 1 hour of reaction time. After the reaction was complete, the flask was heated to 230°C under a vacuum of 25" Hg for 4 hours to remove unreacted maleic anhydride. The final product was a brown clear viscous liquid. The polymer had about 2.0 wt% of grafted maleic anhydride.

### Example P2: Preparation of Maleated Olefin Copolymer in Solution

An ethylene propylene copolymer (Mn=22000, 49.62 wt% of reaction mass), 110N base oil (22.29 wt% of reaction mass), and maleic anhydride (1.26 wt% of reaction mass) were charged into a two-neck round-bottom flask equipped with a condenser and a Dean Stark apparatus under a nitrogen blanket. The flask was heated to 165°C and held for 1 hour to ensure good dissolution of the polymers. After complete dissolution, dicumyl peroxide (0.19 wt% of reaction mass) was charged to the flask, the flask was held for 30 minutes followed by another charge of dicumyl peroxide (0.19 wt% of reaction mass) and a further 1 hour reaction time. After the reaction was complete, the flask was heated to 230°C under vacuum of 25" Hg for 4 hours to remove unreacted maleic anhydride. The final product was a brown clear viscous liquid. The polymer has about 2.0 wt% grafted maleic anhydride.

### EXAMPLE 1

A maleated ethylene propylene copolymer having a maleation level of 2.0 wt.% or 0.4 carboxylic acid groups per 1000 number average molecular weight (10 wt.%) was used in the following examples. The MA-EP copolymer can be made by reacting ethylene-propylene copolymer with maleic anhydride. The MA-EP copolymer combined with oil (110N, 86.58 wt.%) was added into a two-neck round-bottom flask equipped with a condenser and a Dean Stark apparatus under a nitrogen blanket. The flask was heated to 140-150°C for 24 hours to ensure good dissolution and dehydration of the polymers. After complete dissolution, NPPDA (0.26 wt.% of the reaction mass) was added to the mixture. The flask was heated to 170°C and left to react under nitrogen for another 24 hours. After complete reaction, a polyether amine, Jeffamine® M-2005 (2.5 wt.% of reaction mass), was added and left to react for another 8 hours. A mixture of 110N and nonyl aldehyde (0.66 wt% of reaction mass, 50/50 weight ratio) was then added to the flask and mix for 1 hour. The reaction resulted in a final product that was a brown clear viscous liquid. The product has good dispersancy, good low temperature performance, and improves fuel economy when used as a viscosity modifier in engine oils.

### EXAMPLE 2

The product prepared in Example P1 (44.20 wt% of reaction mass) was diluted with 110N base oil (40.00 wt% of reaction mass) in a two-neck round-bottom flask equipped with a condenser and a Dean Stark apparatus under a nitrogen blanket. The flask was heated to 145°C for 1hour or longer to ensure good dissolution of the polymers and dehydration. The temperature was then increased to 165C, and Jeffamine® M-2005 (7.52 wt% of reaction mass) and 3-amino-1-propanol (0.30 wt% of reaction mass) were added and reacted for 4 hours. The final product was a brown clear viscous liquid.

### EXAMPLE 3

The product prepared in Example P2 (76.14 wt% of reaction mass) was diluted with 110N base oil (19.87 wt% of reaction mass) in a two-neck round-bottom flask equipped with a condenser and a Dean Stark apparatus under a nitrogen blanket. The flask was heated to 145°C for 1 hour or longer to ensure good dissolution of the polymers and dehydration. The temperature was then increased to 165C, and Jeffamine® M-600 (2.25 wt% of reaction mass) and NPPDA (0.75 wt% of reaction mass) were added and reacted for 4 hours. Subsequently, nonyl aldehyde (0.99 wt% of reaction mass) was added, and the flask was held at 165°C for another hour. The final product was a brown clear viscous liquid.

### EXAMPLE 4

A maleated ethylene propylene copolymer (Mn=40,000) having a maleation level of 2.0 wt.% or 0.4 carboxylic acid groups per 1000 number average molecular weight (10 wt.%) was used in this example. The MA-EP copolymer can be made by reacting ethylene-propylene copolymer with maleic anhydride. The MA-EP copolymer (20.0 wt% of reaction mass) combined with oil (110N, 77.34 wt% of reaction mass) in a two-neck round-bottom flask equipped with a condenser and a Dean Stark apparatus under a nitrogen blanket. The flask was heated to 140-150°C for 24 hours to ensure good dissolution and dehydration of the polymers. After complete dissolution, NPPDA (0.5 wt% of reaction mass) was added to the mixture. The flask was heated to 170°C and left to react under nitrogen for another 24 hours. After complete reaction, a polyether amine, Jeffamine® M-600 (1.50 wt% of reaction mass), was added and left to react for another 8 hours. Nonyl aldehyde (0.99 wt% of reaction mass) was added and held for another 2 hours. The reaction resulted in a final product that was a brown clear viscous liquid.

### COMPARATIVE EXAMPLE 1

The same procedure was used to for Comparative Example 1 as used for Example 1, except that NPPDA was not grafted onto this composition. The same MA-EP copolymer as was employed in Example 1 was combined with oil and added to a two-neck round-bottom flask equipped with a condenser and a Dean-Stark apparatus under a nitrogen blanket. The flask was heated to 140-150°C for 24 hours to ensure good dissolution and dehydration of the polymers. Jeffamine M-2005 (6 wt.% of reaction mass) was added and left to react for 8 hours.

### COMPARATIVE EXAMPLE 2

In this example, an OCP polymer without any functionalization was used.

### COMPARATIVE EXAMPLE 3

The same procedure was used to create Comparative Example 3 as was used for Comparative Example 1 except that NPPDA (0.6 wt.% of reaction mass) was added to the reaction mixture.

Table 3 shows a comparison of the components and properties of the different polymers produced according to Example 1 and Comparative Examples 1-3. The kinematic viscosity was determined using ASTM D445. The shear stability index (SSI) was measured accordingly to ASTM-D6022. Thickening power was measured by using 1 wt% polymer in a reference oil which has a kinematic viscosity at 100°C at about 5.0 cSt. Dispersancy was measured according to the method disclosed in U.S. Patent no. 8,927,469. In this method, E_{c} (Effective Concentration) was determined as the lowest polymer concentration at which the sooted oil viscosity does not change significantly with shear rate. Nitrogen on polymer was determined by combustion element analysis using a CE Elantech Instrument.

**TABLE 3**

| **EX** | **Jeffamine 2005 (wt %)** | **NPPDA (wt.%)** | **Polymer (wt.%)** | **Nitrogen on Polymer (wt.%)** | **Kinematic Viscosity @ 100°C (mm²/sec)** | **Thickening powerP @ 100°C (cSt)** | **SSI** | **Dispersancy (Ec)** |
|---|---|---|---|---|---|---|---|---|
| 1 | 2.5 | 0.26 | 10.0 | 0.41 | 1110 | 5.13 | 25.0 | 1.1 |
| C1 | 6 | 0 | 12.13 | 0.16 | 1273 | 5.76 | 29.3 | No effect |
| C2 | 0 | 0 | 12.5 | 0.0 | 1058 | 4.1 | 23.7 | No effect |
| C3 | 0 | 0.6 | 12 | 0.48 | 1135 | 4.1 | 20.0 | 0.6 |

Each of the polymers produced according to Example 1 and Comparative examples 1-3 was combined with a base oil to produce a 5W-30 formulated oil. The film thickness ("FT"), friction, cold crank start ("CCS"), viscosity index ("VI"), high temperature high shear ("HTHS") viscosity at 100°C and 150°C were measured using the method of ASTM D4683 for each of the oil formulations. The results are shown in Table 4. From the measured results, the fuel economy improvement value for a virgin engine oil ("FEI1") can be predicted based on low friction and low HTHS. The predicted FEI1 for each of the 5W-30 oil formulations also shown in table 4.

Thin film friction was measured on a mini-traction machine (MTM). The TFF test measures thin-film lubrication regime traction coefficients using a Mini-Traction Machine (MTM) from PCS Instruments. These traction coefficients were measured at 130°C with an applied load of 50N between an ANSI 52100 steel disk and an ANSI 52100 steel ball as oil was being pulled through the contact zone at an entrainment speed of 500 mm/s. A slide-to-roll ratio of 50% between the ball and disk was maintained during the measurements.

**TABLE 4**

| **EX** | **Film Thickness (µm)** | **Thin Film Friction** | **CCS (MPa-s)** | **HTHS @150°C (cP)** | **HTHS @ 100°C (cP)** | **Predicted FEI1 (%)** |
|---|---|---|---|---|---|---|
| 1 | 57 | 0.039 | 6232 | 2.92 | 6.38 | 1.77 |
| C1 | 58 | 0.046 | 6450 | 2.79 | 6.18 | 1.72 |
| C2 | 54 | 0.05 | 7059 | 3.17 | 7.34 | 1.46 |
| C3 | 51 | 0.05 | 6786 | 2.99 | 6.63 | 1.67 |

Based on the combination of the HTHS at both 100°C and 150°C, the higher film thickness, and the lower friction in a 5W-30 formulated oil, as well as the soot dispersancy, the polymer of Example 1 has the potential to provide better fuel efficiency than the polymers of Comparative Examples 1-3 as indicated by the higher predicted fuel efficiency shown in Table 4.

Film thickness was measured by using an ElastoHydrodynamic thin-film measurement system. Cold Crank Simulator (CCS) was measured according to the method of ASTM D5293 at about 30 °C.

Table 5 shows the performance of the polymers of Example 1 and 2 compared to the performance of the polymers of comparative Examples 1-3 in a different engine oil formulation.

**TABLE 5**

| **EX** | **Thin Film Friction** | **CCS (MPa-s)** | **HTHS @150°C (cP)** | **HTHS @ 100°C (cP)** | **Predicted FEI1 (%)** |
|---|---|---|---|---|---|
| 1 | 0.054 | 6965 | 3.01 | 6.83 | 1.53 |
| 2 | 0.043 | 6869 | 3.14 | 6.87 | 1.62 |
| C1 | 0.058 | 6948 | 3.12 | 6.76 | 1.48 |
| C2 | 0.064 | 7558 | 3.31 | 7.68 | 1.27 |
| C3 | 0.055 | 7327 | 3.17 | 7.24 | 1.50 |

Other embodiments of the present disclosure will be apparent to those skilled in the art from consideration of the specification and practice of the embodiments disclosed herein. As used throughout the specification and claims, "a" and/or "an" may refer to one or more than one. Each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only.

The foregoing embodiments are susceptible to considerable variation in practice. Accordingly, the embodiments are not intended to be limited to the specific exemplifications set forth hereinabove.

The patentees do not intend to dedicate any disclosed embodiments to the public.

## Claims

1. A functionalized polymer which is a reaction product obtainable by a process comprising steps of
reacting a hydrocarbon polymer grafted with an acylating agent with:
i) 1-99 mol% of a hydrocarbyl substituted poly(oxyalkylene) amine and/or a hydrocarbyl substituted poly(oxyalkylene) alcohol, and
ii) 1-99 mol% of a polyamine,
wherein both molar percentages are based on total moles of components i) and ii) and components i) and ii) can be added any order.

2. The functionalized polymer according to claim 1, wherein component i) comprises a hydrocarbyl substituted poly(oxyalkylene) amine of the formula I:
R₁-(O-CHR₂-CHR₃)ₓ-A I
wherein R₁ is a hydrocarbyl group having from 1 to 35 carbon atoms; R₂ and R₃ are each independently hydrogen, methyl, or ethyl and each R₂ and R₃ are independently selected in each -O-CHR₂-CHR₃- unit; A is amino, -CH₂-amino or N-alkyl amino having 1 to 10 carbon atoms; and x is an integer from 2 to 45;
in particular wherein component i) comprises a hydrocarbyl substituted poly(oxyalkylene) amine of the formula II: 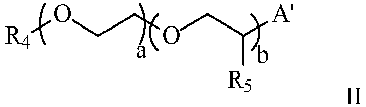 wherein R₄ is a hydrocarbyl group having from 1 to 35 carbon atoms, R₅ is independently hydrogen or a C₁-C₁₀ alkyl group for each repeat unit, A' is -NH-R₆, R₆ is hydrogen or a C₁-C₁₀ alkyl group, and a and b are integers such that a+b is from 2 to 45;
preferably wherein in Formula II, a is an integer of from 1 to 30 and b is an integer of from 1 to 44; more preferably wherein in the formula II, a is 1-15 and b is 10-40.

3. The functionalized polymer according to claim 1, wherein component i) comprises a hydrocarbyl-substituted poly(oxyalkylene) alcohol of the formula:
R₁-(O-CHR₂-CHR₃)ₓ-R₁₉-OH
wherein R₁ is a hydrocarbyl group having from 1 to 35 carbon atoms; R₂ and R₃ are each independently hydrogen, methyl, or ethyl and each R₂ and R₃ are independently selected in each -O-CHR₂-CHR₃- unit; R₁₉ is nothing or a C₁-C₁₀ alkylene group; and x is an integer from 2 to 45.

4. The functionalized polymer of claim 1, wherein the hydrocarbon polymer comprises a copolymer of ethylene and one or more C₃-C₂₈ alpha olefins, preferably wherein the functionalized polymer meets at least one of a) and b):
a) the copolymer of ethylene and one or more C₃-C₂₈ alpha olefins contains 0.1 to 0.75 carboxylic groups per 1000 number average molecular weight units of the polymer backbone;
b) the copolymer of ethylene and one or more C₃-C₂₈ alpha olefins has a number average molecular weight of 5,000 to 250,000 amu and comprises 10-80 wt.% of ethylene and 20-90 wt.% of the one or more C₃-C₂₈ alpha olefins.

5. The functionalized polymer of claim 1, wherein the hydrocarbon polymer comprises polyisobutylene.

6. The functionalized polymer of claim 1, wherein the hydrocarbon polymer comprises a hydrogenated styrene-butadiene star copolymer.

7. The functionalized polymer of claim 1, wherein the polyamine is selected from the group consisting of:
a) an N-arylphenylenediamine represented by the formula III: 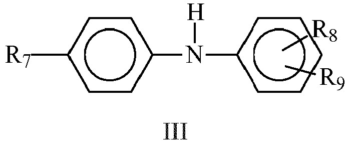 in which R₇ is hydrogen, --NH-aryl, --NH-arylalkyl, --NH-alkyl, or a branched or straight chain radical having from 4 to 24 carbon atoms selected from alkyl, alkenyl, alkoxyl, aralkyl, alkaryl, hydroxyalkyl or aminoalkyl; R₈ is --NH₂, CH₂--(CH₂)ₙ--NH₂, CH₂-aryl-NH₂, in which n has a value from 1 to 10; and R₉ is hydrogen, alkyl, alkenyl, alkoxyl, aralkyl, alkaryl having from 4 to 24 carbon atoms;
b) an aminothiazole;
c) an aminocarbazole represented by the formula IV: 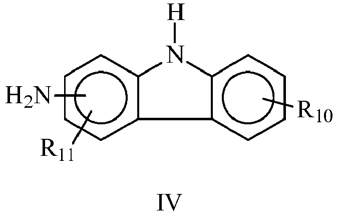 in which R₁₀ and R₁₁ represent hydrogen or an alkyl, alkenyl or alkoxyl radical having from 1 to 14 carbon atoms;
d) an aminoindole represented by the formula V: 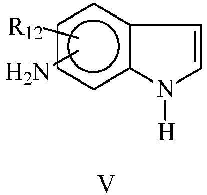 in which R₁₂ represents hydrogen or an alkyl radical having from 1 to 14 carbon atoms;
e) an aminopyrrole represented by the formula VI: 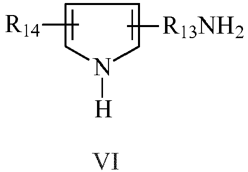 in which R₁₃ is a divalent alkylene radical having 2-6 carbon atoms and R₁₄ is hydrogen or an alkyl radical having from 1 to 14 carbon atoms;
f) an amino-indazolinone represented by the formula VII: 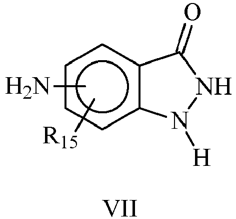 in which R₁₅ is hydrogen or an alkyl radical having from 1 to 14 carbon atoms;
g) an aminomercaptotriazole represented by the formula VIII: 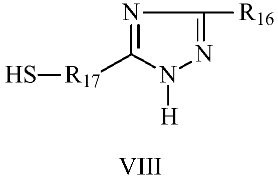 in which R₁₆ can be absent or is a C₁-C₁₀ linear or branched hydrocarbon selected from the group consisting of alkyl, alkenyl, arylalkyl, or aryl and R₁₇ can be absent or is a C₁-C₁₀ linear or branched hydrocarbylene selected from the group consisting of alkylene, alkenylene, arylalkylene, or arylene;
h) an aminoperimidine represented by the formula IX: 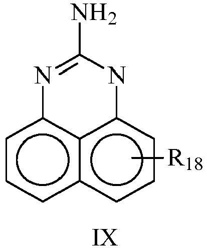 in which R₁₈ represents hydrogen or an alkyl or alkoxy radical having from 1 to 14 carbon atoms;
i) an aminoalkyl imidazole; and
j) an aminoalkyl morpholine.

8. The functionalized polymer of claim 7, wherein the polyamine comprises a polyamine represented by the formula III: 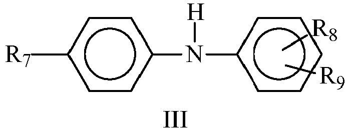 wherein R₇ is hydrogen, -NH-aryl, -NH-arylalkyl, -NH-alkyl or a branched or straight chain radical having from 4 to 24 carbon atoms selected from alkyl, alkenyl, alkoxyl, aralkyl, alkaryl, hydroxyalkyl or aminoalkyl; R₈ is --NH₂, CH₂--(CH₂)ₙ--NH₂, CH₂-aryl-NH₂, in which n has a value from 1 to 10; and R₉ is hydrogen, alkyl, alkenyl, alkoxyl, aralkyl, alkaryl having from 4 to 24 carbon atoms.

9. The functionalized polymer of claim 1, wherein the polyamine is selected from the group consisting of N-phenyl-1,4-phenylenediamine, N-phenyl-1,3-phenylendiamine, and N-phenyl-1,2-phenylenediamine.

10. The functionalized polymer of claim 1, wherein the hydrocarbon polymer is grafted with maleic anhydride.

11. A viscosity modifier concentrate comprising:
greater than 50 wt.% of a base oil; and
5 to less than 50 wt.% of a functionalized polymer as claimed in claim 1, both based on a total weight of the additive concentrate.

12. A lubricating composition comprising:
greater than 50 wt.% of a base oil; and
0.001-10 wt.% of a functionalized polymer as claimed in claim 1, both based on the total weight of the lubricating composition..

13. The lubricating composition according to claim 12, wherein the total amount of functionalized polymer is from 0.1 wt.% to 5 wt.%, based on the total weight of the lubricating composition.

14. The lubricating composition according to claim 12, wherein the lubricating composition is an engine oil.

15. A method of improving the fuel economy of an engine comprising the steps of lubricating the engine with engine oil as claimed in claim 14, and operating the engine.

## Patentansprüche

1. Funktionalisiertes Polymer, bei dem es sich um ein Reaktionsprodukt handelt, das erhältlich ist durch ein Verfahren, das die folgenden Schritte umfasst:
Umsetzen eines Kohlenwasserstoffpolymers, das mit einem Acylierungsmittel gepfropft ist, mit:
i) 1-99 Mol-% eines durch Hydrocarbyl substituierten Poly(oxyalkylen)amins und/oder eines durch Hydrocarbyl substituierten Poly(oxyalkylen)alkohols, und
ii) 1-99 Mol-% eines Polyamins,
wobei beide Molprozentangaben sich auf die Gesamtmolzahl der Bestandteile i) und ii) beziehen und die Bestandteile i) und ii) in einer beliebigen Reihenfolge zugegeben werden können.

2. Funktionalisiertes Polymer nach Anspruch 1, wobei der Bestandteil i) ein durch Hydrocarbyl substituiertes Poly(oxyalkylen)amin der Formel I umfasst:
R₁-(O-CHR₂-CHR₃)ₓ-A I
worin R₁ eine Hydrocarbylgruppe mit 1 bis 35 Kohlenstoffatomen ist; R₂ und R₃ jeweils unabhängig Wasserstoff, Methyl oder Ethyl sind und jedes R₂ und R₃ in jeder -O-CHR₂-CHR₃- -Einheit unabhängig ausgewählt sind; A Amino, -CH₂-Amino oder N-Alkylamino mit 1 bis 10 Kohlenstoffatomen ist; und x eine ganze Zahl von 2 bis 45 ist;
wobei insbesondere der Bestandteil i) ein durch Hydrocarbyl substituiertes Poly(oxyalkylen)amin der Formel II umfasst: 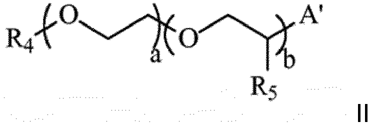 worin R₄ eine Hydrocarbylgruppe mit 1 bis 35 Kohlenstoffatomen ist, R₈ für jede Wiederholungseinheit unabhängig Wasserstoff oder eine C₁-C₁₀-Alkylgruppe ist, A' -NH-R₆ ist, R₆ Wasserstoff oder eine C₁-C₁₀-Alkylgruppe ist, und a und b ganze Zahlen derart sind, dass a+b 2 bis 45 ist;
wobei in Formel II vorzugsweise a eine ganze Zahl von 1 bis 30 ist und b eine ganze Zahl von 1 bis 44 ist; wobei in Formel II weiter bevorzugt a 1 bis 15 ist und b 10 bis 40 ist.

3. Funktionalisiertes Polymer nach Anspruch 1, wobei der Bestandteil i) einen durch Hydrocarbyl substituierten Poly(oxyalkylen)alkohol der folgenden Formel umfasst:
R₁-(O-CHR₂-CHR₃)x-R₁₉-OH
worin R₁ eine Hydrocarbylgruppe mit 1 bis 35 Kohlenstoffatomen ist; R₂ und R₃ jeweils unabhängig Wasserstoff, Methyl oder Ethyl sind und jedes R₂ und R₃ in jeder -O-CHR₂-CHR₃- -Einheit unabhängig ausgewählt sind; R₁₉ nichts oder eine C₁-C₁₀-Alkylengruppe ist; und x eine ganze Zahl von 2 bis 45 ist.

4. Funktionalisiertes Polymer nach Anspruch 1, wobei das Kohlenwasserstoffpolymer ein Copolymer von Ethylen und einem oder mehreren C₃-C₂₈-alpha-Olefinen umfasst, wobei das funktionalisierte Polymer vorzugsweise mindestens eines von a) und b) erfüllt:
a) das Copolymer von Ethylen und einem oder mehreren C₃-C₂₈-alpha-Olefinen enthält 0,1 bis 0,75 Carboxylgruppen pro 1000 zahlenmittlerer Molekulargewichtseinheiten des Polymergrundgerüsts;
b) das Copolymer von Ethylen und einem oder mehreren C₃-C₂₈-alpha-Olefinen weist ein zahlenmittleres Molekulargewicht von 5.000 bis 250.000 Dalton auf und umfasst 10-80 Gew.-% Ethylen und 20-90 Gew.-% des einen oder der mehreren C₃-C₂₈-alpha-Olefine.

5. Funktionalisiertes Polymer nach Anspruch 1, wobei das Kohlenwasserstoffpolymer Polyisobutylen umfasst.

6. Funktionalisiertes Polymer nach Anspruch 1, wobei das Kohlenwasserstoffpolymer ein hydriertes Styrol-Butadien-Sterncopolymer umfasst.

7. Funktionalisiertes Polymer nach Anspruch 1, wobei das Polyamin ausgewählt ist aus der Gruppe, bestehend aus:
a) einem N-Arylphenylendiamin, das durch die der Formel III dargestellt ist: 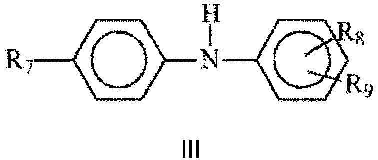 worin R₇ Wasserstoff, --NH-Aryl, --NH-Arylalkyl, --NH-Alkyl oder ein verzweigter oder geradkettiger Rest mit 4 bis 24 Kohlenstoffatomen, ausgewählt aus Alkyl, Alkenyl, Alkoxyl, Aralkyl, Alkaryl, Hydroxyalkyl oder Aminoalkyl, ist; R₈ --NH₂, CH₂--(CH₂)ₙ--NH₂, CH₂-Aryl-NH₂, worin n einen Wert von 1 bis 10 hat, ist; und R₉ Wasserstoff, Alkyl, Alkenyl, Alkoxyl, Aralkyl, Alkaryl mit 4 bis 24 Kohlenstoffatomen ist;
b) einem Aminothiazol;
c) einem Aminocarbazol der Formel IV: 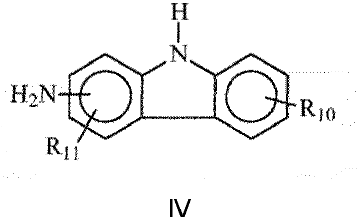 worin R₁₀ und R₁₁ für Wasserstoff oder einen Alkyl-, Alkenyl- oder Alkoxylrest mit 1 bis 14 Kohlenstoffatomen steht;
d) einem Aminoindol der Formel V: 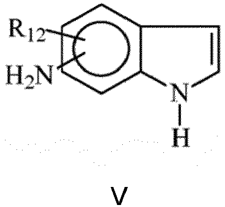 worin R₁₂ für Wasserstoff oder einen Alkylrest mit 1 bis 14 Kohlenstoffatomen steht;
e) einem Aminopyrrol der Formel VI: 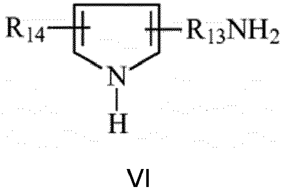 worin R₁₃ ein zweiwertiger Alyklenrest mit 2 bis 6 Kohlenstoffatomen ist und R₁₄ Wasserstoff oder ein Alkylrest mit 1 bis 14 Kohlenstoffatomen ist;
f) einem Aminoindazolinon der Formel VII: 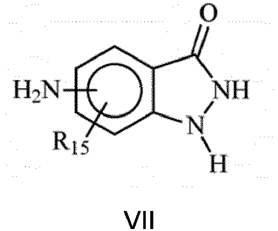 worin R₁₅ für Wasserstoff oder einen Alkylrest mit 1 bis 14 Kohlenstoffatomen steht;
g) einem Aminomercaptotriazol der Formel VIII: 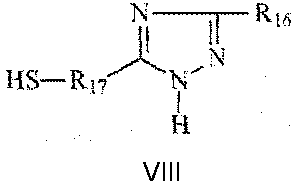 worin R₁₆ abwesend sein kann oder ein linearer oder verzweigter C₁-C₁₀-Kohlenwasserstoff ist, der ausgewählt ist aus der Gruppe, bestehend aus Alkyl, Alkenyl, Arylalkyl oder Aryl, und R₁₇ abwesend sein kann oder ein lineares oder verzweigtes C₁-C₁₀-Hydrocarbylen ist, das ausgewählt ist aus der Gruppe, bestehend aus Alkylen, Alkenylen, Arylalkylen oder Arylen;
h) einem Aminoperimidin der Formel IX: 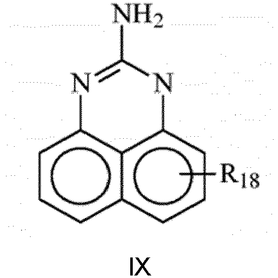 worin R₁₈ für Wasserstoff oder einen Alkyl- oder Alkoxyrest mit 1 bis 14 Kohlenstoffatomen steht;
i) einem Aminoalkylimidazol; und
j) einem Aminoalkylmorpholin.

8. Funktionalisiertes Polymer nach Anspruch 7, wobei das Polyamin ein Polyamin der Formel III umfasst: 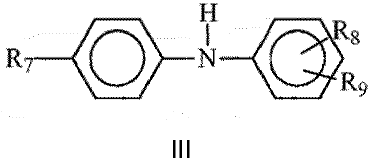 worin R₇ Wasserstoff, -NH-Aryl, -NH-Arylalkyl, -NH-Alkyl oder ein verzweigter oder geradkettiger Rest mit 4 bis 24 Kohlenstoffatomen, ausgewählt aus Alkyl, Alkenyl, Alkoxyl, Aralkyl, Alkaryl, Hydroxyalkyl oder Aminoalkyl, ist; R₈ --NH₂, CH₂--(CH₂)ₙ--NH₂, CH₂-Aryl-NH₂, worin n einen Wert von 1 bis 10 hat, ist; und R₉ Wasserstoff, Alkyl, Alkenyl, Alkoxyl, Aralkyl, Alkaryl mit 4 bis 24 Kohlenstoffatomen ist.

9. Funktionalisiertes Polymer nach Anspruch 1, wobei das Polyamin ausgewählt ist aus der Gruppe, bestehend aus N-Phenyl-1,4-phenylendiamin, N-Phenyl-1,3-phenylendiamin und N-Phenyl-1,2-phenylendiamin.

10. Funktionalisiertes Polymer nach Anspruch 1, wobei das Kohlenwasserstoffpolymer mit Maleinsäureanhydrid gepfropft ist.

11. Viskositätsmodifiziererkonzentrat, das Folgendes umfasst:
mehr als 50 Gew.-% eines Basisöls; und
5 bis weniger als 50 Gew.-% eines funktionalisierten Polymers nach Anspruch 1, beides bezogen auf ein Gesamtgewicht des Zusatzstoffkonzentrats.

12. Schmiermittelzusammensetzung, die Folgendes umfasst:
mehr als 50 Gew.-% eines Basisöls; und
0,001 bis 10 Gew.-% eines funktionalisierten Polymers nach Anspruch 1, beides bezogen auf ein Gesamtgewicht der Schmiermittelzusammensetzung.

13. Schmiermittelzusammensetzung nach Anspruch 12, wobei die Gesamtmenge an funktionalisiertem Polymer 0,1 Gew.-% bis 5 Gew.-%, bezogen auf das Gesamtgewicht der Schmiermittelzusammensetzung, beträgt.

14. Schmiermittelzusammensetzung nach Anspruch 12, wobei es sich bei der Schmiermittelzusammensetzung um Motoröl handelt.

15. Verfahren zum Verbessern des Kraftstoffverbrauchs eines Motors, das die Schritte des Schmierens des Motors mit Motoröl nach Anspruch 14 und des Betreibens des Motors umfasst.

## Revendications

1. Polymère fonctionnalisé qui est un produit de réaction pouvant être obtenu par un processus comprenant les étapes consistant à
faire réagir un polymère d'hydrocarbure greffé avec un agent d'acylation avec :
i) 1 à 99 % molaires d'une poly(oxyalkylène)-amine à substitution hydrocarbyle et/ou un poly(oxyalkylène)-alcool à substitution hydrocarbyle, et
ii) 1 à 99 % molaires d'une polyamine,
dans lequel l'un et l'autre des pourcentages molaires sont basés sur le nombre total de moles de composants i) et ii) et les composants i) et ii) peuvent être ajoutés dans n'importe quel ordre.

2. Polymère fonctionnalisé selon la revendication 1, dans lequel le composant i) comprend une poly(oxyalkylène)-amine à substitution hydrocarbyle de la formule I :
R₁-(O-CHR₂-CHR₃)ₓ-A I
dans lequel R₁ est un groupe hydrocarbyle ayant de 1 à 35 atomes de carbone ; R₂ et R₃ sont chacun indépendamment hydrogène, méthyle ou éthyle et R₂ et R₃ sont chacun indépendamment choisis dans chaque motif -O-CHR₂-CHR₃- ; A est amino, -CH₂-amino ou N-alkylamino ayant 1 à 10 atomes de carbone ; et x est un nombre entier allant de 2 à 45 ;
en particulier dans lequel le composant i) comprend une poly(oxyalkylène)-amine à substitution hydrocarbyle de la formule II : 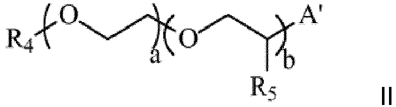 dans lequel R₄ est un groupe hydrocarbyle ayant de 1 à 35 atomes de carbone, R₅ est indépendamment hydrogène ou un groupe alkyle en C₁ à C₁₀ pour chaque motif de répétition, A' est -NH-R₆, R₆ est hydrogène ou un groupe alkyle en C₁ à C₁₀, et a et b sont des nombres entiers de telle sorte que a+b va de 2 à 45 ;
de préférence dans lequel dans la Formule II, a est un nombre entier allant de 1 à 30 et b est un nombre entier allant de 1 à 44 ; plus préférablement dans lequel dans la formule II, a va de 1 à 15 et b va de 10 à 40.

3. Polymère fonctionnalisé selon la revendication 1, dans lequel le composant i) comprend un poly(oxyalkylène)-alcool à substitution hydrocarbyle de la formule :
R₁-(O-CHR₂-CHR₃)ₓ-R₁₉-OH
dans lequel R₁ est un groupe hydrocarbyle ayant de 1 à 35 atomes de carbone ; R₂ et R₃ sont chacun indépendamment hydrogène, méthyle ou éthyle et R₂ et R₃ sont chacun indépendamment choisis dans chaque motif -O-CHR₂-CHR₃- ; R₁₉ est absent ou est un groupe alkylène en C₁ à C₁₀ ; et x est un nombre entier allant de 2 à 45.

4. Polymère fonctionnalisé selon la revendication 1, dans lequel le polymère d'hydrocarbure comprend un copolymère d'éthylène et d'une ou plusieurs alpha-oléfines en C₃ à C₂₈, de préférence dans lequel le polymère fonctionnalisé respecte au moins l'un parmi a) et b) :
a) le copolymère d'éthylène et d'une ou plusieurs alpha-oléfines en C₃ à C₂₈ contient 0,1 à 0,75 groupe carboxylique pour 1000 unités de masse moléculaire moyenne en nombre du squelette polymère ;
b) le copolymère d'éthylène et d'une ou plusieurs alpha-oléfines en C₃ à C₂₈ a une masse moléculaire moyenne en nombre de 5000 à 250 000 uma et comprend 10 à 80 % en poids d'éthylène et 20 à 90 % en poids de la ou des alpha-oléfines en C₃ à C₂₈.

5. Polymère fonctionnalisé selon la revendication 1, dans lequel le polymère d'hydrocarbure comprend du polyisobutylène.

6. Polymère fonctionnalisé selon la revendication 1, dans lequel le polymère d'hydrocarbure comprend un copolymère en étoile styrène-butadiène hydrogéné.

7. Polymère fonctionnalisé selon la revendication 1, dans lequel la polyamine est choisie dans le groupe constitué de :
a) une N-arylphénylènediamine représentée par la formule III : 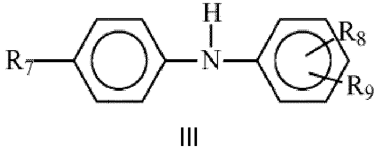 dans laquelle R₇ est hydrogène, --NH-aryle, --NH-arylalkyle, --NH-alkyle, ou un radical à chaîne ramifiée ou linéaire ayant de 4 à 24 atomes de carbone choisi parmi alkyle, alcényle, alcoxyle, aralkyle, alkaryle, hydroxyalkyle ou aminoalkyle ; R₈ est --NH₂, CH₂ --(CH₂)ₙ --NH₂, CH₂ -aryl-NH₂, dans laquelle n a une valeur allant de 1 à 10 ; et R₉ est hydrogène, alkyle, alcényle, alcoxyle, aralkyle, alkaryle ayant de 4 à 24 atomes de carbone ;
b) un aminothiazole ;
c) un aminocarbazole représenté par la formule IV : 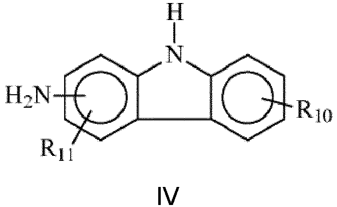 dans laquelle R₁₀ et R₁₁ représentent hydrogène ou un radical alkyle, alcényle ou alcoxyle ayant de 1 à 14 atomes de carbone ;
d) un amino-indole représenté par la formule V : 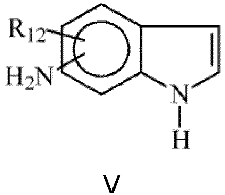 dans laquelle R₁₂ représente hydrogène ou un radical alkyle ayant de 1 à 14 atomes de carbone ;
e) un aminopyrrole représenté par la formule VI : 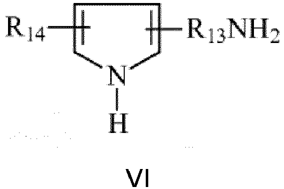 dans laquelle R₁₃ est un radical alkylène divalent ayant 2 à 6 atomes de carbone et R₁₄ est hydrogène ou un radical alkyle ayant de 1 à 14 atomes de carbone ;
f) une amino-indazolinone représentée par la formule VII : 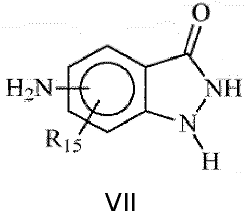 dans laquelle R₁₅ est hydrogène ou un radical alkyle ayant de 1 à 14 atomes de carbone ;
g) un aminomercaptotriazole représenté par la formule VIII : 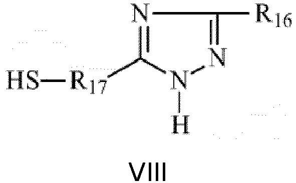 dans laquelle R₁₆ peut être absent ou est un hydrocarbure linéaire ou ramifié en C₁ à C₁₀ choisi dans le groupe constitué d'alkyle, alcényle, arylalkyle ou aryle et R₁₇ peut être absent ou est un hydrocarbylène linéaire ou ramifié en C₁ à C₁₀ choisi dans le groupe constitué d'alkylène, alcénylène, arylalkylène ou arylène ;
h) une aminoperimidine représentée par la formule IX : 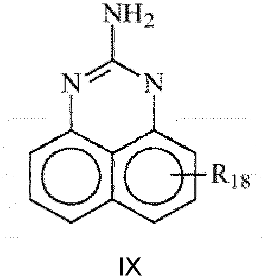 dans laquelle R₁₈ représente hydrogène ou un radical alkyle ou alcoxy ayant de 1 à 14 atomes de carbone ;
i) un aminoalkyl-imidazole ; et
j) une aminoalkyl-morpholine.

8. Polymère fonctionnalisé selon la revendication 7, dans lequel la polyamine comprend une polyamine représentée par la formule III : 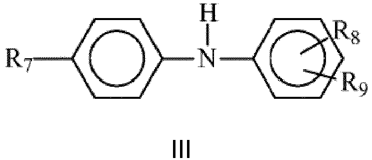 dans lequel R₇ est hydrogène, --NH-aryle, --NH-arylalkyle, --NH-alkyle, ou un radical à chaîne ramifiée ou linéaire ayant de 4 à 24 atomes de carbone choisi parmi alkyle, alcényle, alcoxyle, aralkyle, alkaryle, hydroxyalkyle ou aminoalkyle ; R₈ est --NH₂, CH₂--(CH₂)ₙ--NH₂, CH₂-aryl-NH₂, dans laquelle n a une valeur allant de 1 à 10 ; et R₉ est hydrogène, alkyle, alcényle, alcoxyle, aralkyle, alkaryle ayant de 4 à 24 atomes de carbone.

9. Polymère fonctionnalisé selon la revendication 1, dans lequel la polyamine est choisie dans le groupe constitué de N-phényl-1,4-phénylènediamine, N-phényl-1,3-phénylèndiamine, et N-phényl-1,2-phénylènediamine.

10. Polymère fonctionnalisé selon la revendication 1, dans lequel le polymère d'hydrocarbure est greffé avec de l'anhydride maléique.

11. Concentré d'agent modifiant la viscosité comprenant :
plus de 50 % en poids d'une huile de base ; et
5 jusqu'à moins de 50 % en poids d'un polymère fonctionnalisé selon la revendication 1, l'un et l'autre sur la base d'un poids total du concentré d'additif.

12. Composition de lubrification comprenant :
plus de 50 % en poids d'une huile de base ; et
0,001 à 10 % en poids d'un polymère fonctionnalisé selon la revendication 1, l'un et l'autre sur la base du poids total de la composition de lubrification.

13. Composition de lubrification selon la revendication 12, dans laquelle la quantité totale de polymère fonctionnalisé va de 0,1 % en poids à 5 % en poids, sur la base du poids total de la composition de lubrification.

14. Composition de lubrification selon la revendication 12, dans laquelle la composition de lubrification est une huile moteur.

15. Procédé d'amélioration de l'économie de carburant d'un moteur comprenant les étapes consistant à lubrifier le moteur avec une huile moteur selon la revendication 14, et à faire fonctionner le moteur.
